# EUROPÄISCHE PATENTSCHRIFT

(11) **EP 3 914 482 B1**
(45) Veröffentlichungstag und Bekanntmachung des Hinweises auf die Patenterteilung: **12.04.2023**
(21) Anmeldenummer: 20702591.7
(22) Anmeldetag: 23.01.2020
(51) Int. Cl.: B60R 21/017

(54) **VERFAHREN UND VORRICHTUNG ZUR REGELUNG DER ELEKTRISCHEN SPANNUNG FÜR EINE SICHERHEITSRELEVANTE LAST**
METHOD AND DEVICE FOR CONTROLLING THE ELECTRICAL VOLTAGE FOR A SAFETY-RELEVANT LOAD
PROCÉDÉ ET DISPOSITIF DE RÉGULATION DE LA TENSION ÉLECTRIQUE POUR UNE CHARGE PERTINENTE POUR LA SÉCURITÉ

(30) Priorität: 24.01.2019 DE 102019101741; 24.01.2019 DE 102019101732; 24.01.2019 DE 102019101733; 24.01.2019 DE 102019101735; 24.01.2019 DE 102019101739; 27.02.2019 DE 102019104912; 17.04.2019 DE 102019110096; 17.04.2019 DE 102019110099
(43) Veröffentlichungstag der Anmeldung: 01.12.2021
(73) Patentinhaber: Elmos Semiconductor SE, 44227 Dortmund (DE)
(72) Erfinder: SUDHAUS, André, 45665 Recklinghausen (DE); ABAZA, Fikret, 47169 Duisburg (DE)
(74) Vertreter: dompatent von Kreisler Selting Werner - Partnerschaft von Patent- und Rechtsanwälten mbB
(86) Internationale Anmeldenummer: PCT/EP2020/051657
(87) Internationale Veröffentlichungsnummer: WO 2020/152283

(56) Entgegenhaltungen:
- WO-A1-2004/096613
- WO-A1-2013/182387
- DE-A1-102008 011 681
- DE-A1-102013 103 104

## Beschreibung

Die Erfindung betrifft ein Verfahren und eine Vorrichtung zur Regelung der Spannung für eine sicherheitsrelevante Last, die gegenüber Spannungswerten außerhalb eines und insbesondere oberhalb eines Nominalspannungsbereichs empfindlich ist, wobei es sich bei der Last insbesondere um das Zündelement eines Airbag-Systems handelt.

Anders ausgedrückt betrifft die Erfindung eine Regelschaltung für die Lastspannung VL einer sicherheitsrelevanten Last SL, die gegen Werte der Lastspannung VL außerhalb, insbesondere oberhalb eines sicheren Lastspannungsbereiches (Safe-Operating-Area, SOA) empfindlich ist, und ein Verfahren zu deren Betrieb.

Airbag-Systeme werden in Fahrzeugen für das Rückhalten der Insassen im Falle von Kollisionen eingesetzt. Da es sich um sicherheitsrelevante Vorrichtungen handelt, werden diese Vorrichtungen bevorzugt nach dem Standard ISO 26262 entwickelt. Bei ordnungsgemäßer Befolgung dieser Norm wird die Wahrscheinlichkeit für das Auftreten gefährlicher Fehlfunktionen der Vorrichtung unter einen vorgegebenen Wert gesenkt. Mit der Erfindung werden Maßnahmen vorgestellt, die eine unbeabsichtigt unterbrochene intermetallische Verbindung an einer kritischen Stelle der Vorrichtung im Betrieb so kompensieren, dass sie eine Schädigung der sicherheitsrelevanten Last (im Fall eines Airbag-Zündelements als Beispiel für eine sicherheitsrelevante Last) eine unbeabsichtigte Zündung des Zündelements - Englisch: Squib - (eines Airbags zur Erzeugung der Gase für die Entfaltung des Airbags) sicher ausschließen, die Funktionstüchtigkeit der sicherheitsrelevanten Last und insbesondere des Airbags aber weiterhin garantieren. Bei einer unbeabsichtigten Auslösung eines Airbags während der Fahrt muss von schwersten Verletzungen und sogar vom möglichen Tod von Insassen ausgegangen werden. Im Sinne der ISO26262 darf daher ein solcher Abriss einer elektrischen Verbindung nicht ohne Abfangmaßnahme bleiben. Dies ist im Stand der Technik nicht gelöst.

Im Falle eines Verbindungsabrisses kann die Spannung über der elektrischen Last den zulässigen Lastspannungsbereich SOA der elektrischen sicherheitsrelevanten Last SL, hier der Squib-Last, überschreiten. Das führt dazu, dass die elektrische Last Squib thermisch zerstört werden kann.

Aus DE-A-197 48 311 ist eine Ansteuerschaltung für eine Fahrzeuginsassen-Sicherheitsvorrichtung bekannt. In DE-A-10 2005 045 233 ist ein Steuergerät für den Personenschutz beschrieben.

Aus DE-B-103 02 789 ist eine Ansteuerschaltung für ein Insassenschutzsystem ohne zusätzlichen Sicherheitstransistor bekannt, bei dem die Spannung über einen Zündkreis aus einem Highside-Transistor, der Zündpille und einem Lowside-Transistor konstant gehalten wird. Ferner ist in DE-A-10 2005 008 905 eine Spannungsbegrenzungsschaltung für die Spannung über einem Zündkreis aus einem Highside-Transistor, einer Zündpille und einem Lowside-Transistor beschrieben, wobei auch bei dieser Schaltung ein Sicherheitsschalter nicht bereitgestellt wird.

Aus DE-A-10 2005 030 770 sind eine Schaltungsanordnung und ein Verfahren zum Steuern einer Sicherheitseinrichtung für ein Fahrzeug bekannt, wobei die Schaltungsanordnung über einen Sicherheitstransistor verfügt.

Aus DE-T-60 2004 006 973 (EP-B-1 602 532) ist eine Steuervorrichtung zur Aktivierung eines Fahrzeugsicherheits-Aktivierungselements mit einem Sicherheitstransistor und einer Stromregelung bekannt.

Aus DE-B-102 55 115 ist eine Ansteuerschaltung für eine Zündpille eines Fahrzeugrückhaltesystems bekannt, bei dem die Stromeinstellung über den Sicherheitstransistor erfolgt.

Aus DE-A-10 2010 028 544 ist ein Steuergerät für einen Betrieb eines Sicherheitssystems für ein Fahrzeug mit einem Aufwärtswandler bekannt, der als ein Schaltwandler ausgebildet ist und der eine von einer Fahrzeugbatteriespannung abgeleitete Eingangsspannung in eine höhere Ladespannung an seinen Ausgang wandelt. Das bekannte Sicherheitssystem weist ferner einen Energiereservespeicher auf, der mittels der Ladespannung für den Betrieb des Sicherheitssystems in einem Autarkiefall aufgeladen wird. Die technische Lehre in DE-A-10 2010 028 544 ist dadurch gekennzeichnet, dass wenigstens ein Abwärtswandler invertiert zum Aufwärtswandler betrieben wird, wobei der wenigstens eine Abwärtswandler die Ladespannung oder eine von dem Energiereservespeicher abgegebene Spannung abwärts wandelt. Abwärts- und Aufwärtswandler werden dabei über zwei separate SPI-Schnittstellen betrieben, was eine unabhängige Steuerung erlaubt.

Aus WO-A-2004/087468 ist eine Steuereinheit für ein Rückhaltesystem bekannt. Dabei wird ein Software-Element über eine bereits vorhandene Diagnoseschnittstelle des Steuergeräts eingespeist, das alle Zündkreise und den Auslösealgorithmus zur Zündung aller Zündkreise konfiguriert und für einen Sicherheitsbaustein, der unabhängig von einem Prozessor im Steuergerät die Sensorwerte überprüft und dann gegebenenfalls in Abhängigkeit von der Überprüfung die Zündkreise freigibt, solche Sensorwerte emuliert, so dass der Sicherheitsbaustein diese Zündkreise freigibt.

Aus WO-A-2004/096613 ist ein Verfahren und/oder eine Vorrichtung nach dem Oberbegriff des Anspruchs 1 und/oder des Anspruchs 12 zur Regelung der Spannung für eine sicherheitsrelevante Last bekannt, die gegenüber Spannungswerten außerhalb eines und insbesondere oberhalb eines Nominalspannungsbereichs empfindlich ist, wobei das Verfahren insbesondere zur Regelung der Spannung für ein Zündelement eines Airbags vorgesehen ist, indem die Regelung der Spannung für die sicherheitsrelevante Last durch einen elektrische Signale verarbeitenden Hauptregelkreis erfolgt.

Eine Aufgabe der Erfindung ist es, ein Verfahren und eine Vorrichtung zur Regelung der Spannung für eine sicherheitsrelevante Last zu schaffen, die im Falle einer Leitungsunterbrechung zu keinerlei Fehlfunktionen des Betriebs der sicherheitsrelevanten Last bei gleichzeitiger Aufrechterhaltung von dessen Funktionstüchtigkeit führt.

Zur Lösung dieser Aufgabe wird mit der Erfindung ein Verfahren zur Regelung der Spannung für eine sicherheitsrelevante Last vorgeschlagen, wobei bei dem Verfahren
- die Regelung der Spannung für die sicherheitsrelevante Last durch einen elektrische Signale verarbeitenden Hauptregelkreis erfolgt und
- die Regelung der Spannung für die sicherheitsrelevante Last in dem Fall, in dem der Hauptregelkreis unterbrochen ist, durch einen elektrische Signale verarbeitenden Notregelkreis erfolgt,
- wobei der Notregelkreis in dem Augenblick, in dem der Hauptregelkreis unterbrochen wird, automatisch aktiviert wird.

Nach der Erfindung ist also sinngemäß vorgesehen, dass zwei Regelkreise (nämlich der Hauptregelkreis und der Notregelkreis) mit ihren Regelstrecken und Rückführungen parallelgeschaltet sind. Die Rückführleitungen beider Regelkreise können sich bis zum Eingang des Reglers erstrecken. Solange die Rückführleitung des Hauptregelkreises nicht unterbrochen ist, arbeitet die erfindungsgemäße Vorrichtung gemäß dem Hauptregelkreis. Ist dieser Hauptregelkreis bezüglich seiner Rückführleitung unterbrochen, so nimmt automatisch der Notregelkreis seine Arbeit auf.

Der Ausgang der Regelstrecke des Notregelkreises kann aber auch an einem Verbindungspunkt längs der Rückführleitung des Hauptregelkreises mit deren Rückführleitung verbunden sein. Dann arbeitet der Hauptregelkreis so lange, wie der Rückleitungsabschnitt zwischen dem Verbindungsknotenpunkt und dem Ausgang der Regelstrecke des Hauptregelkreises nicht unterbrochen ist. Sollte dieser Leitungsabschnitt unterbrochen sein, übernimmt der Notregelkreis automatisch seine Arbeit.

Der Regler (sowie andere elektronischen und Leitungskomponenten) einer Vorrichtung zum Auslösen der Funktion einer sicherheitsrelevanten Last sind zumeist als integrierte Schaltungen ausgeführt. Demgegenüber ist die die Spannung an der sicherheitsrelevanten Last beeinflussende Regelstrecke als externes Bauelement bzw. als externe Bauelementanordnung konzipiert, die außerhalb des IC angeordnet ist. Damit muss der Ausgang der Regelstrecke durch eine externe Leitung bis zum zugehörigen Anschlusspin des IC verbunden werden. Von diesem Anschlusspin aus existiert dann intern im IC eine Verbindung, die den Anschluss intern mit dem Eingang des Reglers koppelt. Die interne Verdrahtung innerhalb des IC erfolgt hierbei durch einen Bonddraht und durch in der integrierten Schaltung ausgeführte Leitungen. Der Bonddraht kann allerdings auf Grund thermischer Wechselbeanspruchungen oder auch auf Grund anderer Ereignisse abreißen, brechen o.dgl. unterbrochen werden. Das gilt auch für die externe Leitung zwischen dem besagten Anschluss und dem Ausgang der Regelstrecke bzw. demjenigen Schaltungspunkt, an dem die geregelte Spannung für die sicherheitsrelevante Last anliegt. Wenn also in dieser Rückführleitung des Hauptregelkreises eine Unterbrechung eintritt, so besteht die Gefahr, dass der Regler gegen diese Störung dergestalt arbeitet, dass er die Spannung an der sicherheitsrelevanten Last erhöht. Dies kann zur Schädigung der sicherheitsrelevanten Last und möglicherweise zu einer nicht gewollten Aktivierung der sicherheitsrelevanten Last führen. Auf das Beispiel eines Zündelements eines Airbags für die sicherheitsrelevante Last bezogen bedeutet dies, dass das Zündelement versehentlich zünden kann, der Airbag sich also versehentlich aufbläst.

Der zuvor beschriebene Fehlerfall wird durch den erfindungsgemäßen Ansatz zuverlässig behandelt, und zwar dergestalt, dass es nicht zu einer versehentlichen Auslösung der Funktion der sicherheitsrelevanten Last kommt, dass die sicherheitsrelevante Last aber immer noch weiterhin beabsichtigt zur Auslösung gebracht werden kann. Denn im Falle der Unterbrechung der zuvor beschriebenen Leitung übernimmt dann der Notregelkreis die Regelfunktion. Der Wert der Spannung am Eingang der Regelstrecke für den Notregelkreis ist nur geringfügig verschieden von dem Wert, auf dem zuvor die Spannung für die sicherheitsrelevante Last durch den Hauptregelkreis geregelt worden ist. Damit unterdrückt man ein signifikantes Hochregeln der auf Grund des Leitungsabrisses oder -durchbruchs nicht mehr rückgeführten Spannung an der sicherheitsrelevanten Last.

Insoweit von Vorteil ist es, wenn der Hauptregelkreis und der Notregelkreis jeweils eine elektrische Impedanz aufweisende Regelstrecke umfasst und wenn die Impedanz der Regelstrecke des Notregelkreises größer ist als die Impedanz der Regelstrecke des Hauptregelkreises.

Eine weitere Ausgestaltung der Erfindung sieht vor, dass der Hauptregelkreis und der Nebenregelkreis einen gemeinsamen Regler aufweisen, an dessen Eingang eine Regelabweichungsgröße anliegt, die als Differenz zwischen einer Führungsgröße als Sollwert und einer Regelgröße als Istwert definiert ist, dass der Hauptregelkreis und der Nebenregelkreis jeweils eine eigene, mit einem Eingang und einem Ausgang versehene Regelstrecke aufweisen, die parallel zueinander geschaltet ist und den Ausgang des Reglers mit einer Rückführleitung für die Regelgröße verbinden, wobei der Ausgang der Regelstrecke des Notregelkreises an einem Verbindungsknotenpunkt mit der Rückführleitung verbunden ist, der weniger weit vom Eingang des Reglers entfernt angeordnet ist als der Ausgang der Regelstrecke des Hauptregelkreises, und dass der Hauptregelkreis aktiv ist, wenn der Abschnitt der Rückführleitung zwischen dem Ausgang der Regelstrecke des Hauptregelkreises und dem Verbindungsknotenpunkt nicht unterbunden ist, und bei einer Unterbrechung dieses Abschnitts der Rückführleitung automatisch der Notregelkreis arbeitet.

In weiterer zweckmäßiger Ausgestaltung der Erfindung kann vorgesehen sein,
- dass für die Regelung der Spannung durch sowohl den Hauptregelkreis als auch den Notregelkreis ein Regler verwendet wird, dessen Ausgang als Stellgrößensignal über eine elektrische Steuerleitung auf eine Regelstrecke gegeben wird, die ein elektrisches Regelstreckenglied mit einem steuerbaren veränderbaren Widerstand aufweist, welcher in Reihe mit der sicherheitsrelevanten Last geschaltet ist, wobei das Stellgrößensignal den Wert des Widerstandes beeinflusst,
- dass dem Regler als Eingangsgröße die Differenz aus einem Führungsgrößensignal und einem Regelgrößensignal zugeführt wird, wobei das Führungsgrößensignal als oberer Grenzwert des Nominalspannungsbereichs definiert ist und das Regelgrößensignal das Ausgangssignal der Regelstrecke und damit der sich an der sicherheitsrelevanten Last ergebende Spannungswert ist und wobei das Regelgrößensignal über eine elektrische Rückführleitung als Rückführsignal zur Bildung eines Regelabweichungssignals zum Regler zurückgeführt wird,
- dass zwischen der Steuerleitung und der Rückführleitung ein diese beiden Leitungen verbindendes, elektrisches Verbindungsbauteil angeordnet ist, das die Spannungsdifferenz zwischen dem Stellgrößensignal und dem Regelgrößensignal repräsentiert,
- dass der Hauptregelkreis den Regler und die Regelstrecke aufweist,
- dass der Notregelkreis den Regler und das Verbindungsbauteil aufweist und
- dass die Regelung der Spannung für die sicherheitsrelevante Last SL bei einer zwischen dem Ausgang der Regelstrecke und dem Verbindungsknoten von Verbindungsbauteil und Rückführleitung erfolgenden Unterbrechung der Rückführleitung automatisch von dem Hauptregelkreis auf den Notregelkreis übergeht.

Das elektrische Regelstreckenglied der Regelstrecke des Hauptregelkreises und das Verbindungsbauteil der Regelstrecke des Notregelkreises weisen jeweils eine elektrische Impedanz auf, wobei die Impedanz des Verbindungsbauteils zweckmäßigerweise größer ist als die Impedanz des Regelstreckenglieds.

Das Verbindungsbauteil kann ein oder mehrere elektrische und/oder elektronische Bauelemente aufweisen (siehe weiter oben).

Das Regelstreckenglied kann spannungsgesteuert sein und das Stellgrößensignal kann ein Spannungssignal sein, wobei das Verbindungsbauteil einen Widerstand aufweist, der zwischen die Steuerleitung und die Rückführleitung geschaltet ist.

Alternativ oder zusätzlich kann dabei vorgesehen sein, dass das Verbindungsbauteil ein unidirektional elektrisch leitendes Sperrbauteil, insbesondere eine Diode oder einen als Diode arbeitenden Transistor aufweist, wobei das unidirektional leitende Sperrbauteil einen Stromfluss von dem Verbindungsknoten der Rückführleitung zur Steuerleitung hin unterbindet und in umgekehrter Richtung erlaubt, wenn der Spannungsabfall über dem Verbindungsbauteil die für die Aktivierung der Leitend-Funktion erforderliche Polung und/oder Größe aufweist.

Das Regelstreckenglied des Hauptregelkreises ist typischerweise ein Transistor mit einem Steueranschluss für den Empfang des am Ausgang des Reglers anliegenden Stellgrößensignals und weist einen hinsichtlich seines ohmschen Widerstandes veränderbaren Strompfad auf, in Reihe zu dem die sicherheitsrelevante Last geschaltet ist.

Nach der Erfindung können die Vorrichtung bzw. das Verfahren für ein oder mehrere sicherheitsrelevante Lasten verwendet werden, wobei die mehreren sicherheitsrelevanten Lasten parallel zueinander geschaltet sind.

Die Rückführleitung von Haupt- und Notregelkreis kann einen Spannungsteiler mit einem Mittenanzapfungsknoten aufweisen, der mit dem Eingang des Reglers zur Rückführung einer das Regelgrößensignal repräsentierenden Werts verbunden ist, der kleiner ist als der sich an der sicherheitsrelevanten Last ergebende Spannungswert.

Als gemeinsamer Regler für die beiden Regelreise eignet sich ein Regler mit einem das Regelabweichungssignal zu 0 ausregelnden I-Anteil und insbesondere ein PI- oder PID-Regler.

Ferner wird zur Lösung der oben genannten Aufgabe mit der Erfindung eine Vorrichtung zur Regelung der Spannung für eine sicherheitsrelevante Last vorgeschlagen, wobei die Vorrichtung versehen ist mit
- einem Hauptregelkreis, der einen Regler mit einem Eingang für ein Regelabweichungssignal sowie einen Ausgang zum Ausgeben eines Stellgrößensignals und eine die Spannung an der sicherheitsrelevanten Last als Regelgrößensignal beeinflussende Regelstrecke aufweist,
- wobei der Ausgang des Reglers über eine Steuerleitung mit dem Eingang der Regelstrecke verbunden und das Regelgrößensignal am Ausgang der Regelstrecke über eine Rückführleitung zum Eingang des Reglers rückführbar ist,
- wobei das Regelabweichungssignal die Differenz zwischen dem Regelgrößensignal und einem Führungsgrößensignal ist, das als oberer Grenzwert des Nominalspannungsbereichs definiert ist, und
- einem Notregelkreis, der den Regler und ein parallel zur Regelstrecke angeordnetes, die Steuerleitung mit der Rückführleitung verbindendes, elektrisches Verbindungsbauteil aufweist,
- wobei bei einem Wegfall des Regelgrößensignals in dessen Funktion zur Bildung des Regelabweichungssignals sich dieses automatisch als die Differenz zwischen dem Signal am Verbindungsknoten von Verbindungsbauteil und Rückführleitung einerseits und dem Führungsgrößensignal andererseits ergibt.

In weiterer zweckmäßiger Ausgestaltung der Erfindung kann vorgesehen sein, dass der Hauptregelkreis und der Notregelkreis einen gemeinsamen Regler aufweisen, an dessen Eingang eine Regelabweichungsgröße anliegt, die als Differenz zwischen einer Führungsgröße als Sollwert und einer Regelgröße als Istwert definiert ist, dass der Hauptregelkreis und der Notregelkreis jeweils eine eigene, mit einem Eingang und einem Ausgang versehene Regelstrecke aufweisen, die parallel zueinander geschaltet ist und den Ausgang des Reglers mit einer Rückführleitung für die Regelgröße verbinden, wobei der Ausgang der Regelstrecke des Notregelkreises an einem Verbindungsknotenpunkt mit der Rückführleitung verbunden ist, der weniger weit vom Eingang des Reglers entfernt angeordnet ist als der Ausgang der Regelstrecke des Hauptregelkreises, und dass der Hauptregelkreis aktiv ist, wenn der Abschnitt der Rückführleitung zwischen dem Ausgang der Regelstrecke des Hauptregelkreises und dem Verbindungsknotenpunkt nicht unterbunden ist, und bei einer Unterbrechung dieses Abschnitts der Rückführleitung automatisch der Notregelkreis arbeitet.

Die Regelstrecken des Hauptregelkreises und des Notregelkreises weisen jeweils eine elektrische Impedanz auf, wobei die Impedanz der Regelstrecke des Notregelkreises größer ist als die Impedanz des Hauptregelkreises.

Das elektrische Regelstreckenglied der Regelstrecke des Hauptregelkreises und das Verbindungsbauteil der Regelstrecke des Notregelkreises weisen jeweils eine elektrische Impedanz auf, wobei die Impedanz des Verbindungsbauteils größer ist als die Impedanz des Regelstreckenglieds.

Das Verbindungsbauteil weist ein oder mehrere elektrische und/oder elektronische Bauelemente auf.

Über dem Verbindungsbauteil fällt die Spannungsdifferenz zwischen dem Stellgrößensignal und dem Regelgrößensignal ab.

Das Regelstreckenglied ist spannungsgesteuert und das Stellgrößensignal ist ein Spannungssignal, wobei das Verbindungsbauteil einen Widerstand aufweist, der zwischen die Steuerleitung und die Rückführleitung geschaltet ist.

Das Verbindungsbauteil weist ein unidirektional elektrisch leitendes Sperrbauteil, insbesondere eine Diode oder einen als Diode arbeitenden Transistor auf, wobei das unidirektional leitende Sperrbauteil einen Stromfluss von dem Verbindungsknoten der Rückführleitung zur Steuerleitung hin unterbindet und in umgekehrter Richtung erlaubt.

Das Regelstreckenglied weist einen Transistor mit einem Steueranschluss für den Empfang des am Ausgang des Reglers anliegendes Stellgrößensignals und einen hinsichtlich seines ohmschen Widerstandes veränderbaren Strompfad auf, in Reihe zu dem die sicherheitsrelevante Last geschaltet ist.

Die Rückführleitung weist einen Spannungsteiler mit einem Mittenanzapfungsknoten auf, der mit dem Eingang des Reglers zur Rückführung einer das Regelgrößensignal repräsentierenden Werts verbunden ist, der kleiner ist als der sich an der sicherheitsrelevanten Last ergebende Spannungswert.

Als gemeinsamer Regler für die beiden Regelkreise eignet sich ein Regler mit einem das Regelabweichungssignal zu 0 ausregelnden I-Anteil und insbesondere ein PI- oder PID-Regler.

Die Erfindung wird nachfolgend anhand eines Ausführungsbeispiels und unter Bezugnahme auf die Zeichnung näher erläutert. Im Einzelnen zeigen dabei:
- Fig. 1: ein Beispiel für eine Ansteuerschaltung einer Zündeinheit Squib eines Airbags nach dem Stand der Technik,
- Fig. 2: die Ansteuerschaltung nach Fig. 1 mit einem zusätzlichen Sicherheitsschalter,
- Fig. 3: ein Beispiel für eine Ausführungsform dieses Sicherheitsschalters und
- Fig. 4: die Ansteuerschaltung für eine Zündeinheit Squib nach dem Stand der Technik, wobei der in dieser Figur gezeigte Sicherheitsschalter nicht notwendigerweise Gegenstand der Erfindung sein muss.

Die oben beschriebene Erfindung lässt sich auch in anderer Art und Weise ausdrücken, was nachfolgend beschrieben wird.

Demnach betrifft die Erfindung ein Verfahren zu Regelung der Lastspannung VL einer sicherheitsrelevanten Last SL, die gegen Lastspannungswerte der Lastspannung VL außerhalb eines sicheren Lastspannungsbereiches SOA empfindlich ist, mit den Schritten
- Regelung der Lastspannung VL über einen dominierenden Hauptregelkreis HRK, z.B. OTA, C1, V4, T1, V5, V6, T2, V7, SL, R2, R1, V3, falls dieser dominierende Hauptregelkreis HRK, z.B. OTA, C1, V4, T1, V5, V6, T2, V7, SL, R2, R1, V3 nicht unterbrochen ist und
- Regelung der Lastspannung V7 über einen nicht dominierenden Notregelkreis NRK, z.B. OTA, C1, V4, T1, V5, R3, V7', R2, R1, V3, falls dieser dominierende Hauptregelkreis HRK, z.B. OTA, C1, V4, T1, V5, V6, T2, V7, SL, R2, R1, V3 unterbrochen ist.

Eine solche "zweistufige" Regelung ist aus dem Stand der Technik nicht bekannt.

Eine erste Alternative einer erfindungsgemäßen Schaltung betrifft eine Regelschaltung für die Lastspannung VL einer sicherheitsrelevanten Last SL, die gegen Lastspannungswerte der Lastspannung VL außerhalb eines sicheren Lastspannungsbereiches SOA empfindlich ist,
- mit einem siebten Knoten V7 und
- mit einem Bezugspotenzial PCB_GND und
- mit einem dominierenden Hauptregelkreis HRK, z.B. OTA, C1, V4, T1, V5, V6, T2, V7, SL, R2, R1, V3 und
- mit einem nicht dominierenden Notregelkreis NRK, z.B. OTA, C1, V4, T1, R3, V7', R2, R1, V3
- wobei der siebte Knoten V7 Teil des dominierenden Hauptregelkreises HRK, z.B. OTA, C1, V4, T1, V5, V6, T2, V7, SL, R2, R1, V3 ist und
- wobei der siebte Knoten V7 kein Teil des nicht dominierenden Notregelkreises NRK, z.B. OTA, C1, V4, T1, R3, V7', R2, R1, V3 ist und
- wobei der siebte Knoten V7 mit der sicherheitsrelevanten Last SL verbunden ist und
- wobei die sicherheitsrelevante Last SL mit dem Bezugspotenzial PCB_GND verbunden ist und
- wobei die Lastspannung VL zwischen dem siebten Knoten V7 und dem Bezugspotenzial PCB_GND abfällt und
- wobei der dominierende Hauptregelkreis HRK, z.B. OTA, C1, V4, T1, V5, V6, T2, V7, SL, R2, R1, V3 die Lastspannung VL als Regelparameter an zumindest einer Stelle der Regelschleife des dominierenden Hauptregelkreises HRK umfasst und
- wobei der nicht dominierende Notregelkreis NRK, z.B. OTA, C1, V4, T1, R3, V7', R2, R1, V3 die Lastspannung VL als Regelparameter an keiner Stelle der Regelschleife des nicht dominierenden Notregelkreises NRK umfasst und
- wobei die Lastspannung VL im Falle eines nicht unterbrochenen dominierenden Hauptregelkreises HRK, z.B. OTA, C1, V4, T1, V5, V6, T2, V7, SL, R2, R1, V3 von der Lastspannung VL abhängt und
- wobei die Lastspannung VL im Falle eines unterbrochenen dominierenden Hauptregelkreises HRK, z.B. OTA, C1, V4, T1, V5, V6, T2, V7, SL, R2, R1, V3 von der Lastspannung VL nicht abhängt und geregelt ist.

Eine solche zweistufige Regelung ist aus dem Stand der Technik nicht bekannt.

Gemäß einer weiteren Alternative der Erfindung betrifft diese eine Regelschaltung für die Lastspannung VL einer sicherheitsrelevanten Last SL, die gegen Lastspannungswerte der Lastspannung VL außerhalb eines sicheren Lastspannungsbereiches SOA empfindlich ist,
- mit einem dritten Knoten V3 und
- mit einem vierten Knoten V4 und
- mit einem fünften Knoten V5 und
- mit einem optionalen sechsten Knoten V6 und
- mit einem siebten Knoten V7 und
- mit einem Transkonduktanzverstärker OTA mit einem positiven Eingang + und einem negativen Eingang - und
- mit einem ersten Transistor T1 und
- mit einem zweiten Transistor T2 und
- mit einem ersten Widerstand R1 und
- mit einem zweiten Widerstand R2 und
- mit einem dritten Widerstand R3 und
- mit einer Kapazität C1 und
- mit einem Bezugspotenzial PCB_GND, IC_GND),
- wobei die Lastspannung VL zwischen dem siebten Knoten V7 und dem Bezugspotenzial PCB_GND abfällt und
- wobei der Ausgang V4 des Transkonduktanzverstärkers OTA durch den vierten Knoten V4 gebildet wird und
- wobei die Kapazität C1 als zwischen den vierten Knoten V4 und dem Bezugspotenzial IC_GND wirkend betrachtet werden kann und
- wobei der Steueranschluss des ersten Transistors T1 mit dem vierten Knoten V4 verbunden ist und
- wobei der Drain-Anschluss des ersten Transistors T1 mit dem fünften Knoten V5 oder dem sechsten Knoten V6 verbunden ist
- wobei der dritte Widerstand R3 zwischen den fünften Knoten V5 und dem siebten Knoten V7 geschaltet ist und
- wobei der zweite Widerstand R2 zwischen den siebten Knoten V7 und dem dritten Knoten V3 geschaltet ist und
- wobei der erste Widerstand R1 zwischen den dritten Knoten V3 und dem Bezugspotenzial IC_GND geschaltet ist und
- wobei der dritte Knoten V3 mit dem negativen Eingang - des Transkonduktanzverstärkers OTA verbunden ist und
- wobei der siebte Knoten V7 mit der sicherheitsrelevanten Last SL verbunden ist und
- wobei die sicherheitsrelevante Last SL zwischen siebten Knoten V7 und dem Bezugspotenzial PCB_GND geschaltet ist und
- wobei der zweite Transistor T2 mit seinem Drain-Anschluss mit dem siebten Knoten V7 verbunden ist und
- wobei der zweite Transistor T2 mit seiner Steuerelektrode mit dem fünften Knoten V5, ggf. über einen ersten Schalter S1 verbunden ist und
- wobei der Wert des dritten Widerstands R3 so hochohmig gestaltet ist, dass die Lastspannung VL zwischen dem siebten Knoten V7 unmittelbar am Anschluss der sicherheitsrelevanten Last SL an diesen siebten Knoten V7 und dem Bezugspotenzial PVB_GND die Spannung zwischen dem dritten Knoten V3 gegenüber dem Bezugspotenzial IC_GND im Wesentlichen bestimmt.

In vorteilhafter Weise wird der dritte Widerstand R3 geeignet gewählt, so dass im Falle einer Regelkreisunterbrechung BWB zwischen dem siebten Knoten V7 und dem zweiten Transistor T2 die Spannungserhöhung am Ausgang des ersten Transistors T1, Knoten V4 gegenüber dem Anschluss am zweiten Widerstand V7' an R2 näherungsweise (beispielsweise Abweichungen von maximal bis zu 25 % oder maximal bis zu 15 % oder maximal bis zu 10 % oder maximal bis zu 5 % oder maximal bis zu 3 % oder maximal bis zu 1 %) der sich im nicht unterbrochenen Betrieb einstellenden Spannung zwischen dem sechsten Knoten V6 (Gate von T2) und dem Ausgang V7 (Source von T2) gleicht, d.h. der Wert des dritten Widerstands kann überschlagsweise rechnerisch ermittelt werden.

Der erste Schalter S1 und der die Kombination aus erstem Widerstand R1 und zweiten Widerstand R2 und dritten Widerstand R3 und deren Verschaltung sind aus dem Stand der Technik nicht bekannt.

Die Erfindung wird anhand der Figuren erläutert, und zwar ausgehend vom Stand der Technik.

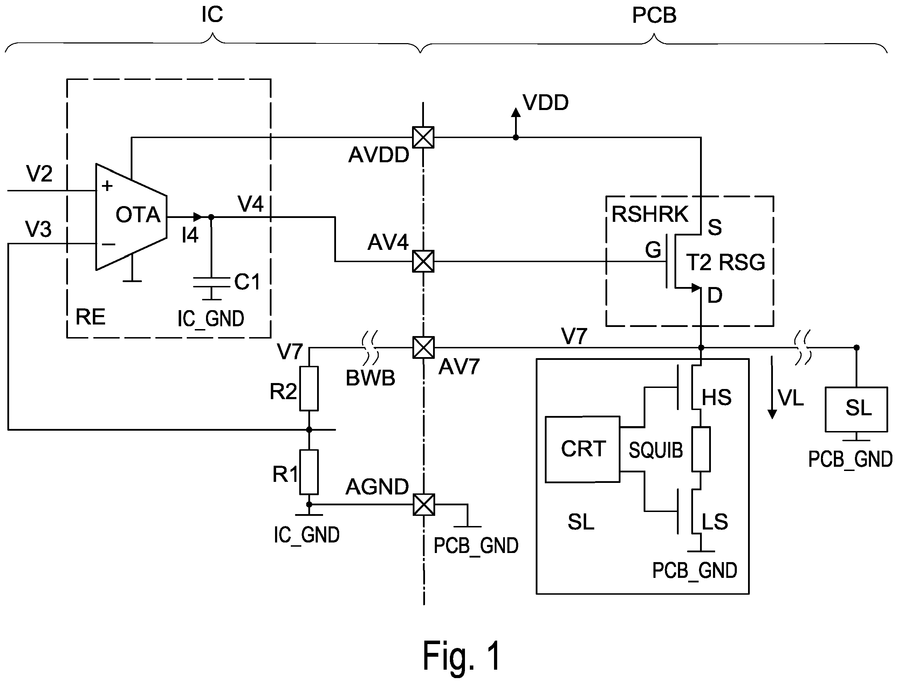

Der Stand der Technik entspricht einer Schaltung gemäß Fig. 1. Die Schaltung gliedert sich in eine integrierte mikroelektronische Schaltung IC zur Kontrolle und Ansteuerung der Zündvorrichtung (als Beispiel für die sicherheitsrelevante Last SL) für den Airbag und in eine gedruckte Schaltung PCB. Es können mehrere Lasten SL parallelgeschaltet sein, wie dies bei Kfz-Airbag-Systemen regelmäßig anzutreffen ist, da diese mehrere über den Innenraum des Fahrzeugs verteilt untergebrachte Airbags aufweisen. Die integrierte mikroelektronische Schaltung IC ist typischerweise auf der gedruckten Schaltung PCB untergebracht und insofern Teil der gedruckten Schaltung. Mit dem Bezugszeichen PCB ist daher insofern der Rest der gedruckten Schaltung gemeint. Die Partitionierung zwischen IC und PCB ist hier nur beispielhaft und kann im Einzelfall abweichen.

Ein Transkonduktanzverstärker OTA (als ein Beispiel für einen Regler) speist einen Ausgangsstrom I4 in den vierten Knoten V4 ein. Dabei nutzt der Transkonduktanzverstärker OTA die Kapazität C1 zur Strom-Spannungswandlung, um seinen Ausgangsstrom I4 in eine Steuerspannung für den Steueranschluss eines externen (zweiten) Transistors T2 umzuwandeln, der seinerseits die Regelstrecke des (Haupt-)Regelkreises HRK bildet. Die Kapazität C1 kann eine parasitäre Bauteilkapazität, beispielsweise die Gate-Source-Kapazität des zweiten Transistors T2 sein. Sie muss es allerdings nicht sein. Darüber hinaus möchten wir hier erwähnen, dass dem Fachmann weitere Varianten für die Kompensation eines solchen Spannungsreglers über die Kapazität C1 und/oder weitere Kondensatoren mit optional unterschiedlichen Bezugspotentialen aus dem Stand der Technik bekannt sein sollten. Die gezeigte Kompensationsschaltung aus Transkonduktanzverstärker OTA und Kapazität C1 in Fig. 1 nennt man im Stand der Technik typischerweise eine Kompensationsschaltung vom TYP I. (Das I steht hierbei für das Einfügen des I-Anteils in die Regelschleife). Stattdessen kann auch eine Kompensationsschaltung vom TYP II verwendet werden, die beispielsweise zwei Pole und eine Nullstelle aufweist. Auch ist die Verwendung einer Kompensationsschaltung vom TYP III mit beispielsweise zwei Polen und zwei Nullstellen möglich. Eine Kompensationsschaltung vom Typ III ist typischerweise jedoch sehr komplex und aufwendig und für die typischerweise beabsichtigten Nutzungen der Vorrichtung, die eine einfache, kostengünstige Regelstrecke aufweisen sollte, nicht empfehlenswert.

Eine Kompensationsschaltung vom Typ III wird zum Beispiel bei einem DC-DC-Spannungswandlern im "Voltage Mode Control" verwendet, um eine Übertragungsstrecke zweiter Ordnung zu stabilisieren. Mit Kompensationsschaltungen vom Typ III wird im Bereich -40db/dec die Stabilität des jeweiligen Regelkreises hergestellt.

Die Verwendung derartiger komplexer Kompensationsschaltungen ist von der Erfindung umfasst.

Mit der Steuerspannung schaltet der Transkonduktanzverstärker OTA bei Bedarf den externen zweiten Transistor T2, der das Regelstreckenglied RSHRK des (Haupt-)Regelreises bildet, dessen Leitfähigkeit bzw. Widerstand durch das Stellgrößensignal am Gate G steuerbar ist. Der Ausgangsstrom I4 (Stellgrößensignal) des Transkonduktanzverstärkers OTA ist dabei bevorzugt proportional zur Differenz zwischen dem Spannungspotenzial an seinem positiven Eingang + minus dem Spannungspotenzial an seinem negativen Eingang -. Das System wird aus einer Versorgungsspannungsleitung VDD und einer Bezugspotenzialleitung PCB_GND der gedruckten Schaltung PCB mit elektrischer Energie versorgt.

Die Bezugspotenzialleitung IC_GND der integrierten Schaltung IC ist über einen Anschluss AGND der Bezugspotenzialleitung IC_GND der integrierten Schaltung IC an die Bezugspotenzialleitung PCB_GND der gedruckten Schaltung PCB angeschlossen.

Die Versorgungsspannungsleitung der integrierten Schaltung IC ist über einen Anschluss AVDD der Versorgungsspannungsleitung der integrierten Schaltung IC an die Versorgungsspannungsleitung VDD der gedruckten Schaltung PCB angeschlossen.

Der Source-Anschluss S des zweiten Transistors T2 ist mit der Versorgungsspannungsleitung VDD verbunden. Der Drain-Anschluss D des zweiten Transistors T2 ist mit einem siebten Knoten V7 verbunden. Zwischen den siebten Knoten V7 und bevorzugt dem Bezugspotenzial PCB_GND der gedruckten Schaltung PCB ist die Squib-Last SL geschaltet. Sie umfasst in der Regel eine Serienschaltung aus einem ersten Zündtransistor, einem Sprengsatz (dem Squib) und einem zweiten Zündtransistor. Diese Serienschaltung aus diesen drei Elementen ist zur Vereinfachung nur als Block SL dargestellt. Diese Squib-Last SL enthält somit die beiden Sicherheitsschalter HS und LS für die Zündung des SQUIB und die SQUIBs selbst, was in Fig. 1 mit den betreffenden Steuerungen CNTR und Steuerleitungen lediglich angedeutet ist.

Der siebte Knoten V7 ist über einen Anschluss AV7 der integrierten Schaltung IC mit einem ersten Anschluss eines zweiten Widerstands R2 eines Spannungsteilers verbunden, der Teil der integrierten Schaltung IC ist. Der zweite Anschluss des zweiten Widerstands R2 ist mit dem ersten Anschluss eines ersten Widerstands R1 des Spannungsteilers und einem dritten Knoten V3 innerhalb der integrierten Schaltung IC verbunden. Der zweite Widerstand R2 und der erste Widerstand R1, die zusammen den Spannungsteiler bilden, können in der Realität durch funktionsähnliche komplexere Schaltungen ersetzt sein. Der dritte Knoten V3 bildet den negativen Eingang - des Transkonduktanzverstärkers OTA und repräsentiert das rückgeführte Ist- oder Regelgrößensignal, d.h. die Spannung des siebten Knotens V7. Der positive Eingang + des Transkonduktanzverstärkers OTA ist mit einem zweiten Knoten V2 verbunden, an dem das Soll- oder Führungsgrößensignal anliegt. Der Transkonduktanzverstärker OTA wird in dem Beispiel der Fig. 1 aus der Versorgungsspannungsleitung VDD der gedruckten Schaltung PCB über einen Anschluss AVDD des Integrierten Schaltkreises IC und die Bezugspotenzialleitung IC_GND der integrierten Schaltung IC mit elektrischer Energie versorgt. Die Kapazität C1 ist in dem Beispiel der Fig. 1 zwischen den Ausgang V4 des Transkonduktanzverstärkers OTA und der Bezugspotenzialleitung IC_GND der integrierten Schaltung IC (d.h. Signalmasse) geschaltet. Durch Vergrößerung des Signals am zweiten Knoten V2 kann eine Zündung der Squib-Last SL erlaubt werden.

Das hier zu lösende Problem tritt nun bei einem potenziellen, kritischen Leitungsabriss BWB zwischen dem zweiten Widerstand R2 und dem siebten Knoten V7 auf, der sich zwischen dem zweiten Transistor T2 und der Squib-Last SL befindet. Dieser Abriss kann z.B. ein IC-interner Bonddrahtabriss oder eine Unterbrechung der IC-externen Leitung zwischen dem Anschluss AV7 und dem Knoten V7 sein. Der zweite Transistor T2 ist dann immer noch mit der Squib-Last SL verbunden. Trotz der Verbindungsunterbrechung und damit nicht mehr erfolgenden Rückführung des Istwerts zum Regler ist damit eine Zündung der Squib-Last SL nicht ausgeschlossen.

Noch wichtiger als die Unterbindung der unbeabsichtigten Zündung ist es in der Regel sogar, dass die Zündfähigkeit durch den Fehler eingeschränkt wird, da eventuell sichere Betriebsbereiche SOA nach dem Fehlereintritt durch den Betrieb in diesem fehlerhaften Zustand verletzt werden können. In der Fehlerfolge können dadurch weitere Zündungen unterbunden werden.

Die Squib-Last SL kann dann, bei einer möglichen Versorgungsspannung VDD von 30V gegenüber dem Bezugspotenzial PCB_GND der gedruckten Schaltung PCB von beispielsweise 33V mit einer Spannung von mehr als 30V belastet werden. Dies kann die Squib-Last SL schädigen oder sogar zünden. In jedem Fall handelt es sich um ein Verlassen des Bereichs der erlaubten Betriebswerte der Squib-Last SL (Safe-Operating-Area-Violation oder SOA-Verletzung).

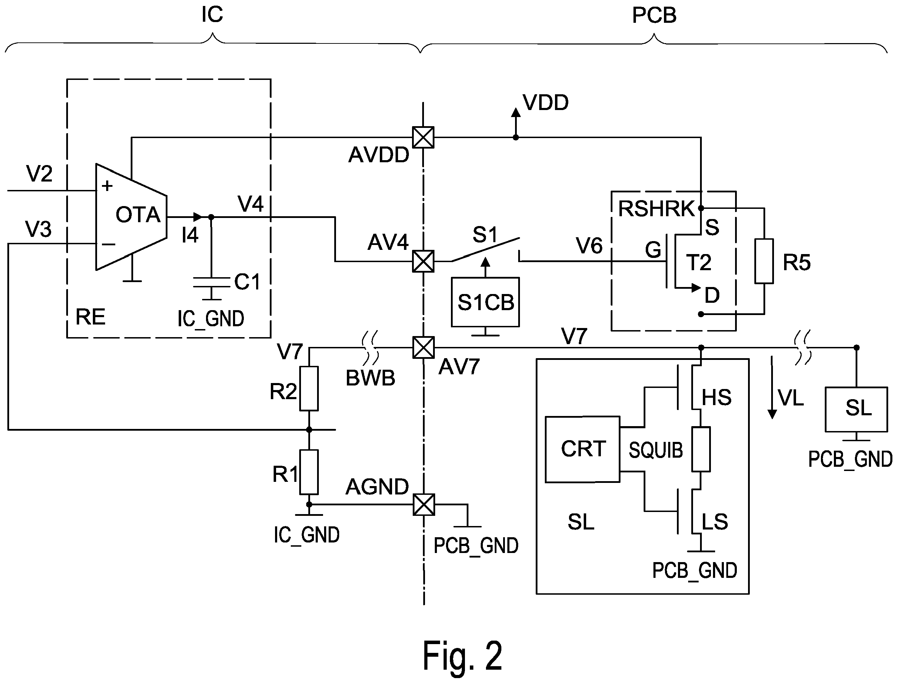

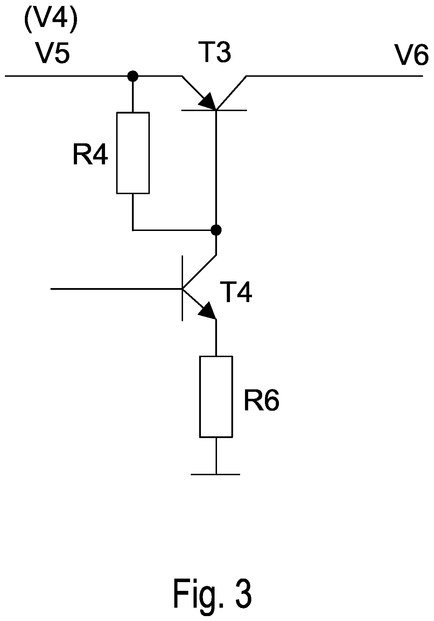

Um die Sicherheit der Gesamtvorrichtung zu erhöhen, kann ein zusätzlicher (erster) Schalter S1 vorgesehen werden (siehe Fig. 2). Bevorzugt wird dieser erste Schalter S1 extern außerhalb des integrierten Schaltkreises IC angeordnet. Ein Vorschlag für eine beispielhafte Realisierung dieses ersten Schalters ist in Fig. 3 gezeigt.

Der erste Schalter S1 wird bevorzugt von einem nicht dargestellten Mikrorechner, der bevorzugt Teil der Vorrichtung ist, bedient. Der Mikrorechner ist bevorzugt Teil eines Kontrollblocks S1CB für den ersten Schalter S1, der weitere Funktionen umfassen kann. Der erste Schalter S1 und der Kontrollblock S1CB für den ersten Schalter S1 können Teil der integrierten Schaltung IC sein. Bevorzugt sind sie jedoch zur Erhöhung der Sicherheit extern von der integrierten Schaltung IC als Teil der gedruckten Schaltung PCB angeordnet. Dieser externe erste Schalter S1 ermöglicht den Test des zweiten Transistors T2. Ein nicht gezeigter Analog-zu-Digital-Wandler, der bevorzugt Teil der integrierten Schaltung IC ist, kann nach dem Öffnen des ersten Schalters S1 das Verhalten des Regelkreises überprüfen. Der erste Schalter S1 wird zwischen den Ausgang V4 des Transkonduktanzverstärkers OTA und dem Steuereingang des zweiten Transistors T2, den sechsten Knoten V6, geschaltet und von dem Kontrollblock S1CB für den ersten Schalter S1 gesteuert.

Fig. 3 zeigt einen beispielhaft vorgeschlagenen externen ersten Schalter S1. Die Schaltung ist mit dem fünften Knoten V5, der später beschrieben wird, oder bei Verwendung der Schaltung nach Fig. 2 mit dem Ausgang V4 des Transkonduktanzverstärkers OTA verbunden. Ferner ist die beispielhafte Schaltung des ersten Schalters S1 über einen sechsten Knoten V6 mit dem Steueranschluss des zweiten Transistors T2 verbunden. Dazwischen ist der dritte Transistor T3 geschaltet, der den eigentlichen Schalter darstellt. Dessen Basis ist über einen vierten Widerstand R4 mit seinem Emitter verbunden. Diese Basis des dritten Transistors T3 wird über einen vierten Transistor T4 und einen sechsten Widerstand R6 angesteuert. Die Basis des vierten Transistors T4 wird dann durch den nicht gezeigten Mikrorechner bzw. den Kontrollblock S1CB für den ersten Schalter S1 angesteuert. Andere Realisierungen des ersten Schalters S1, z.B. in Form von Relais sind denkbar.

Diese Modifikation der Schaltung aus Fig. 1 durch den zusätzlichen externen ersten Schalter S1 ist in Fig. 2 dargestellt.

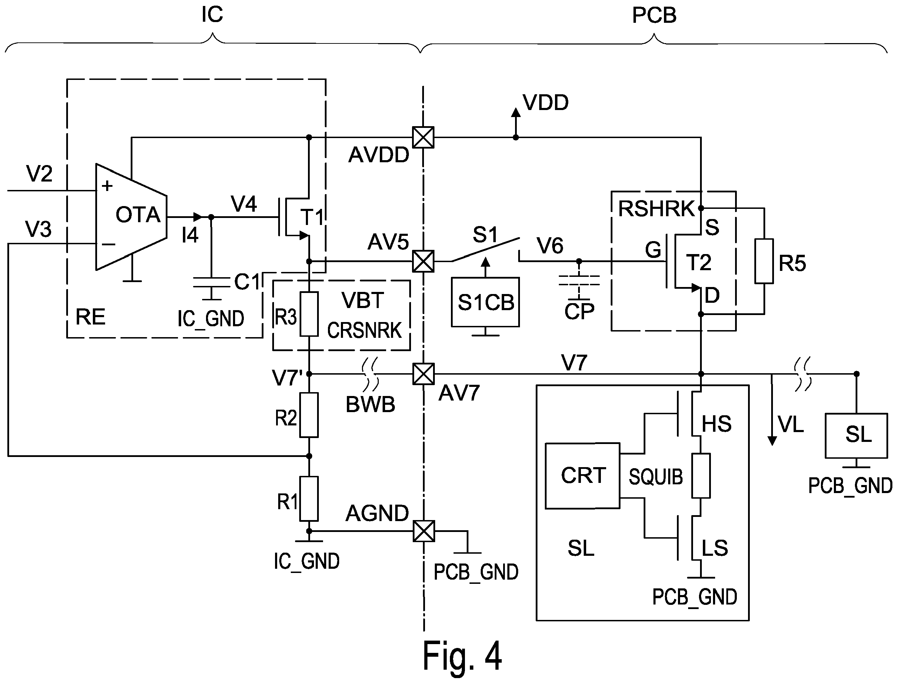

Dieser externe erste Schalter S1 wäre bei einer Verschaltung entsprechend der Fig. 2 eine Belastung für den Transkonduktanzverstärker OTA. Der Ausgang V4 des Transkonduktanzverstärkers OTA sollte daher durch einen Source-Folger entkoppelt werden, was in Fig. 4 gezeigt ist.

In Fig. 4 ist der Ausgangsknoten V4 des Transkonduktanzverstärkers OTA in einen vierten Knoten V4, der weiterhin der Ausgang V4 des Transkonduktanzverstärkers OTA ist, und einen fünften Knoten V5 aufgespalten. Der fünfte Knoten V5 ist nun vorteilhafterweise anstelle des Ausgangs V4 des Transkonduktanzverstärkers OTA mit dem ersten Schalter S1 verbunden.

Der Vorteil dieser Verschaltung liegt insbesondere darin, dass durch den ersten Transistor T1 weitere externe Beschaltungen, wie beispielsweise der Kontrollblock S1CB für den ersten Schalter S1 oder passive Elemente eine Last darstellen, die das Regelverhalten nicht nachteilig beeinflussen. Solche passiven, typischerweise parasitären Elemente sind in Fig. 4 zur Vereinfachung nicht gezeigt, für den Fachmann aber naheliegend nachvollziehbar.

Der Steueranschluss des ersten Transistors T1, der bevorzugt Teil der integrierten Schaltung IC ist, ist mit dem Ausgang V4 des Transkonduktanzverstärkers OTA verbunden. Der Drain-Anschluss D dieses ersten Transistors t1 ist mit dem besagten fünften Knoten V5 und damit mit dem ersten Schalter S1 verbunden. Im Gegensatz zum Stand der Technik ist nun jedoch der fünfte Knoten V5 über einen dritten Widerstand R3, der die Regelstrecke RSNRK eines Notregelkreises bildet, zusätzlich mit dem siebten Knoten V7 verbunden. Wird der dritte Widerstand R3 hochohmig genug ausgeführt, so wird das Potenzial am negativen Eingang - des Transkonduktanzverstärkers OTA weiterhin vornehmlich vom Potenzial am siebten Knoten V7 bestimmt, so lange dieses zur Verfügung steht, die Verbindungsleitung der Rückführung des Regelgrößensignals also nicht unterbrochen ist, und nicht vom Potenzial des fünften Knotens V5.

Durch das für die Erfindung nicht relevante Einfügen des ersten Transistors T1, der als Source-Folger betrieben wird, und das Einfügen des dritten Widerstands R3 wird neben dem äußeren, dominierenden Hauptregelkreis HRK über den zweiten Transistor T2, die Squib-Last SL und den Spannungsteiler aus erstem Widerstand R1 und zweiten Widerstand R2 nun ein zusätzlicher schwächerer und nicht dominierender interner Notregelkreis NRK aus ersten Transistor T1, drittem Widerstand R3, zweiten Widerstand R2 und erstem Widerstand R1 gebildet, wobei anzumerken ist, dass der erste Transistor T1 und/oder der Spannungsteiler aus dem ersten und dem zweiten Widerstand R1, R2 für die Erfindung nicht zwingend erforderlich sind.

Eine Eigenschaft des dritten Widerstands R3, die hier noch erwähnt werden sollte ist, dass bevorzugt der Impedanzwert des dritten Widerstands R3 deutlich größer sein sollte als die Impedanzwerte am Source-Anschluss S des zweiten Transistors T2, d.h. am siebten Knoten V7, im Betrieb der Schaltung. Der Impedanzwert des dritten Widerstands R3 sollte bevorzugt aber gleichzeitig mit Rücksicht auf den Wert des vorgegebenen Verhältnisses R1/R2 des Impedanzwerts des ersten Widerstands R1 zum Impedanzwert des zweiten Widerstands R2 und zu deren Impedanzwerten ausgewählt werden.

Der nicht dominierende Notregelkreis NRK übernimmt die Reglerfunktion immer dann, wenn der äußere Hauptregelkreis HRK hochohmig unterbrochen ist. Dies ist insbesondere im Falle des besagten Leitungsabrisses BWB der Fall. Dieser interne, nicht dominierende Notregelkreis NRK befindet sich bevorzugt komplett innerhalb der integrierten Schaltung IC.

Der zusätzliche erste Transistor T1 hat somit zwei Funktionen:
Der erste Transistor T1 dient im Normalbetrieb als Treiber für eine Last, die am Steueranschluss, dem sechsten Knoten V6 des externen zweiten Transistors T2 angeschlossen ist.

Der erste Transistor T1 dient im Fehlerfall als Treiber für den inneren nicht dominanten Notregelkreis NRK über den dritten Widerstand R3, den zweiten Widerstand R2 und den ersten Widerstand R1.

Im Normalbetrieb ohne Leitungsabriss BWB erfolgt die Regelung wie folgt:
Der zweite Transistor T2 ist ein externer Transistor, der mit einem Fehlerverstärker (Englisch "Error-Amplifier" bestehend aus dem Transkonduktanzverstärker OTA), der Kapazität C1, dem ersten Transistor T1 und über den ersten Schalter S1 angesteuert wird. In diesem Fall arbeitet der erste Transistor T1 als Source-Folger. Typischerweise kann der dritte Widerstand R3 durch seine niedrige Impedanz am Source des ersten Transistors T1 und am Source des zweiten Transistors T2 für diesen Regelungsfall vernachlässigt werden.

Im Fehlerbetrieb bei Leitungsabriss BWB (d.h. bei Unterbrechung des externen Leitungsabschnitts zwischen dem Anschluss AV7) der integrierten Schaltung IC, bei fehlerhafter Verbindung am Anschluss AV7 und/oder bei einem Bonddrahtabriss innerhalb der integrierten Schaltung IC) erfolgt die Regelung wie folgt:
Der dritte Widerstand R3 wird nicht mehr in seiner Wirkung durch den zweiten Transistor T2 überschrieben und unterdrückt, da die Verbindung zwischen dem inneren siebten Knoten V7' und dem außenliegenden siebten Knoten V7 und damit zum zweiten Transistor T2 unterbrochen ist. Somit bestimmt nicht mehr der zweite Transistor T2 das Potenzial des inneren siebten Knotens V7' sondern der Spannungsteiler aus drittem Widerstand R3, zweiten Widerstand R2 und erstem Widerstand R1 sowie das Potential am Ausgang V4 des Transkonduktanzverstärkers OTA. Im Gegensatz zum Stand der Technik entsteht somit im Falle eines Leitungsabrisses BWB ein neuer innerer, nicht dominanter Notregelkreis, der für ein definiertes Potenzial unterhalb der Zündschwelle und innerhalb des zulässigen Arbeitsbereichs der Squib-Last SL am siebten Knoten V7 sorgt. Dieser innere nicht dominante Notregelkreis umfasst den Transkonduktanzverstärker OTA, den ersten Widerstand R1, den zweiten Widerstand R2, den dritten Widerstand R3, die Kapazität C1 und den ersten Transistor T1 wird eingefügt. In diesem Fall arbeitet der externe zweite Transistor T2 als Source-Folger.

Durch den externen ersten Sicherheitsschalter S1 kann die Zündeinheit Squib innerhalb der Squib-Last SL dimensionsmäßig kleiner ausgeführt werden und wird daher kostengünstiger.

Der zusätzliche fünfte Widerstand R5 übernimmt die Regelung für den Normalfall (Nicht-Zündung) bei dem der erste Schalter S1 zu Testzwecken für die Überprüfung des zweiten Transistors T2 geöffnet ist. Die Funktion des zusätzlichen fünften Widerstands R5 besteht im Wesentlichen dann darin, die Squib-Last SL zu Diagnosezwecken aus einer begrenzten Impedanz zu versorgen. Dies dient insbesondere einer Diagnose, die hinsichtlich nicht beabsichtigter Zündung als sicher erachtet werden kann (siehe hier die eingangs genannten deutschen Patentanmeldungen DE 10 2019 101 741.6, DE 10 2019 101 739.4, DE 10 2019 101 735.1, DE 10 2019 101 733.4 und DE 10 2019 101 732.7). Das Potenzial am Steueranschluss V6 des zweiten Transistors T2 wird dabei dann durch eine zweite Kapazität Cp gehalten. Typischerweise reicht es aus, wenn die zweite Kapazität Cp die parasitäre Gate-Kapazität des zweiten Transistors T2 ist.

Die Erfindung betrifft somit eine Regelschaltung für die Lastspannung VL einer sicherheitsrelevanten Last SL, die gegen Lastspannungswerte der Lastspannung VL außerhalb eines sicheren Lastspannungsbereiches SOA der Lastspannung VL empfindlich ist. Die Regelschaltung weist einen siebten Knoten V7, ein Bezugspotenzial PCB_GND und einen dominierenden Hauptregelkreis HRK, z.B. OTA, C1, V4, T1, V5, V6, T2, V7, SL, R2, R1, V3 und einen nicht dominierenden Notregelkreis NRK, z.B. OTA, C1, V4, T1, R3, R2, R1 auf. Der siebte Knoten V7 ist dabei mit der sicherheitsrelevanten Last SL verbunden. Die sicherheitsrelevante Last, hier die Squib-Last SL, ist mit dem Bezugspotenzial PCB_GND oder indirekt über ggf. vorhandene weitere Bauteile verbunden. Die Lastspannung VL fällt zwischen dem siebten Knoten V7 und dem Bezugspotenzial PCB_GND auf der gedruckten Schaltung PCB ab. Das Bezugspotenzial PCB_GND der gedruckten Schaltung PCB und das Bezugspotenzial IC_GND innerhalb der integrierten Schaltung stehen bevorzugt in einem festen Verhältnis zueinander oder sind bevorzugt sogar gleich. Der dominierende Hauptregelkreis HRK, der bevorzugt aus dem Transkonduktanzverstärker OTA, der Kapazität C1, dem vierten Knoten V4, dem ersten Transistor T1, dem fünften Knoten V5, dem sechsten Knoten V6, de, zweiten Transistor T2, dem siebten Knoten V7, der sicherheitsrelevanten Last SL, dem zweiten Widerstand R2, dem ersten Widerstand R1 und dem dritten Knoten V3 besteht, umfasst die Lastspannung VL als Regelparameter an zumindest einer Stelle der Regelschleife des dominierenden Hauptregelkreises HRK. Der nicht dominierende Notregelkreis NRK, der bevorzugt aus dem Transkonduktanzverstärker OTA, der Kapazität C1, dem vierten Knoten V4, dem ersten Transistor T1, dem dritten Widerstand R3, dem inneren siebten Knoten V7', dem zweiten Widerstand R2, dem ersten Widerstand R1 und dem dritten Knoten V3 besteht, umfasst die Lastspannung VL als Regelparameter bevorzugt an keiner Stelle der Regelschleife des nicht dominierenden Notregelkreises NRK. Die Lastspannung VL hängt dabei dann
a. im Falle eines nicht unterbrochenen dominierenden Hauptregelkreises HRK, z.B. OTA, C1, V4, T1, V5, V6, T2, V7, SL, R2, R1, V3 von dem dominierenden Hauptregelkreis HRK, z.B. OTA, C1, V4, T1, V5, V6, T2, V7, SL, R2, R1, V3 ab und
b. im Falle eines unterbrochenen dominierenden Hauptregelkreises HRK, z.B. OTA, C1, V4, T1, V5, V6, T2, V7, SL, R2, R1, V3 von dem nicht dominierenden Notregelkreis NRK, z.B. OTA, C1, V4, T1, R3, V7', R2, R1, V3 ab.

Detaillierter betrifft die Erfindung eine Regelschaltung für die Lastspannung VL einer sicherheitsrelevanten Last SL, die gegen Lastspannungswerte der Lastspannung VL außerhalb eines sicheren Lastspannungsbereiches SOA empfindlich ist, mit einem dritten Knoten V3, mit einem vierten Knoten V4, mit einem fünften Knoten V5, mit einem optionalen sechsten Knoten V6, mit einem siebten Knoten V7, mit einem Transkonduktanzverstärker OTA mit einem positiven Eingang + und einem negativen Eingang -, mit einem ersten Transistor T1, mit einem zweiten Transistor T2, mit einem ersten Widerstand R1, mit einem zweiten Widerstand R2, mit einem dritten Widerstand R3, mit einer Kapazität C1 und mit einem Bezugspotenzial PCB_GND, IC_GND. Der Ausgang V4 des Transkonduktanzverstärkers OTA wird dabei durch den vierten Knoten V4 gebildet. Die Kapazität C1 kann dabei als zwischen den vierten Knoten V4 und dem Bezugspotenzial IC_GND wirkend betrachtet werden. Im Prinzip ist nur wichtig, dass das verwendete Bauelement und seine Verschaltung die gleiche funktionale Wirkung wie eine solche Kapazität C1 hat. Es kann sich beispielsweise um ein parasitäres Bauelement handeln. Der Steueranschluss des ersten Transistors T1 ist mit dem vierten Knoten V4 verbunden, wodurch der erste Transistor T1 durch die Spannung über die Kapazität C1 gesteuert wird, die sich aus der Integration des Ausgangsstromes I4 des Transkonduktanzverstärkers OTA aus seinem Ausgang V4 in die Kapazität C1 hinein ergibt. Der Drain-Anschluss des ersten Transistors T1 ist bevorzugt mit dem fünften Knoten V5 oder dem sechsten Knoten V6 verbunden. Wird kein erster Schalter S1 verwendet, so sind der sechste Knoten V6 und der fünfte Knoten V5 miteinander verbunden. Wird ein erster Schalter S1 verwendet, so ist dieser erste Schalter S1 auf der einen Seite mit dem fünften Knoten V5 verbunden und auf der anderen Seite mit dem sechsten Knoten V6 verbunden und der Steueranschluss des zweiten Transistors T2 ist in diesem Fall dann mit dem sechsten Knoten V6 verbunden.

Der dritte Widerstand R3 ist zwischen den fünften Knoten V5 und dem siebten Knoten V7 geschaltet. Der zweite Widerstand R2 ist zwischen den siebten Knoten V7 und dem dritten Knoten V3 geschaltet. Der erste Widerstand R1 ist zwischen den dritten Knoten V3 und dem Bezugspotenzial IC_GND geschaltet. Der dritte Knoten V3 ist mit dem negativen Eingang - des Transkonduktanzverstärkers OTA verbunden. Der siebte Knoten V7 ist mit der sicherheitsrelevanten Last SL verbunden. Die sicherheitsrelevante Last SL ist zwischen siebten Knoten V7 und dem Bezugspotenzial PCB_GND geschaltet. Der zweite Transistor T2 ist mit seinem Drain-Anschluss mit dem siebten Knoten V7 verbunden. Der zweite Transistor T2 mit seiner Steuerelektrode mit dem fünften Knoten V5, ggf. über einen ersten Schalter S1 und den besagten sechsten Knoten V6 (siehe Fig. 4) verbunden.

Der Wert des dritten Widerstands R3 wird dabei bevorzugt so hochohmig gestaltet, dass die Lastspannung zwischen dem siebten Knoten unmittelbar am Anschluss der sicherheitsrelevanten Last SL an diesen siebten Knoten V7 und dem Bezugspotenzial PVB_GND die Spannung zwischen dem dritten Knoten V3 gegenüber dem Bezugspotenzial IC_GND im Wesentlichen bestimmt.

Der Erfindung liegt ein Verfahren zu Regelung der Lastspannung VL einer sicherheitsrelevanten Last SL, die gegen Lastspannungswerte der Lastspannung VL außerhalb eines sicheren Lastspannungsbereiches SOA empfindlich ist, zugrunde. Es umfasst die Schritte
a. der Regelung der Lastspannung VL über einen dominierenden (Haupt-) Regelkreis HRK, z.B. OTA, C1, V4, T1, V5, V6, T2, V7, SL, R2, R1, V3, falls dieser dominierende Hauptregelkreis HRK, z.B. OTA, C1, V4, T1, V5, V6, T2, V7, SL, R2, R1, V3 nicht unterbrochen ist, und
b. der Regelung der Lastspannung V7 über einen nicht dominierenden (Not-) Regelkreis NRK, z.B. OTA, C1, V4, T1, V5, R3, V7', R2, R1, V3, falls dieser dominierende Hauptregelkreis HRK, z.B. OTA, C1, V4, T1, V5, V6, T2, V7, SL, R2, R1, V3 unterbrochen ist.

Eine solche Regelschaltung für die Lastspannung VL über eine sicherheitsrelevante Last SL ermöglicht zumindest in einigen Realisierungen die Reduktion der maximal an der sicherheitsrelevanten Last SL auftretenden Spannung. Die Vorteile sind hierauf aber nicht beschränkt.

Durch den zusätzlichen ersten Transistor T1 und den dritten Widerstand R3 wird die Sicherheitsanforderung erfüllt, dass die Zündeinheit Squib innerhalb der Squib-Last SL nicht durch eine zu hohe Spannung am siebten Knoten V7 beschädigt werden kann, so dass weniger leistungsstarke und damit kostengünstigere Squib-Lasten als diejenigen im Stand der Technik eingesetzt werden können.

Der wirtschaftliche Vorteil ergibt sich dadurch, dass der externe Schaltkreis des ersten Schalters S1 nur wenige preiswerte Bauteile umfasst und durch die Verwendung dieses externen Schaltkreises des ersten Schalters S1 die Zündeinheit Squib innerhalb der Squib-Last SL mit einem engeren Betriebsparameterbereich SOA ausgestattet werden kann und damit kleiner gewählt werden kann und kostengünstiger hergestellt werden kann. Dies ist technisch möglich, weil infolge der doppelten Absicherung beispielsweise nur 21,7V statt ca. beispielsweise 30V an die Zündeinheit Squib innerhalb der Squib-Last SL gelangen können. Die vorgeschlagene Reglerstruktur mit einem dominieren äußeren Regelkreis und einem nicht dominierenden inneren Regelkreis verhindert somit mögliche Verletzungen des sicheren Betriebsparameterbereichs SOA.

### BEZUGSZEICHENLISTE

- AGND: Anschluss der Bezugspotenzialleitung IC_GND der integrierten Schaltung IC an die Bezugspotenzialleitung PCB_GND der gedruckten Schaltung PCB;
- AV5: Anschluss der V5-Spannung bzw. V5-Leitung;
- AV7: Anschluss der V7-Spannung bzw. V7-Leitung bzw. des siebten Knotens V7;
- AVDD: Anschluss der Versorgungsspannungsleitung der integrierten Schaltung IC an die Versorgungsspannungsleitung VDD der gedruckten PCB;
- B_IC_PCB: beispielhafte Grenze zwischen integrierter Schaltung IC und gedruckter Schaltung PCB;
- BWB: potenzieller, kritischer Leitungsabriss (z.B. Bonddrahtabriss);
- C1: Kapazität;
- CNRT: Steuerung für HS- und LS-Transistoren eines Zündelements SQUIB
- Cp: zweite Kapazität. Typischerweise ist die zweite Kapazität die parasitäre Gate-Kapazität des zweiten Transistors T2;
- D: Drain
- G: Gate des zweiten Transistors
- I4: Ausgangsstrom des Transkonduktanzverstärkers OTA;
- IC: integrierte Schaltung;
- IC_GND: Bezugspotenzial bzw. Bezugspotenzialleitung der integrierten Schaltung IC;
- OTA: Transkonduktanzverstärker;
- PCB: gedruckte Schaltung (Englisch: Printed Circuit Board =PCB);
- PCB_GND: Bezugspotenzial bzw. Bezugspotenzialleitung der gedruckten Schaltung PCB;
- R1: erster Widerstand;
- R2: zweiter Widerstand;
- R3: dritter Widerstand (Regelstreckenglied der Regelstrecke des Notregelkreises);
- R4: vierter Widerstand;
- R5: fünfter Widerstand;
- R6: sechster Widerstand;
- RE: gemeinsame Regler des Hauptregelkreises und des Notregelkreises
- RSG: Regelstreckenglied der Regelstrecke des Hauptregelkreises
- RSHRK: Regelstrecke des Hauptregelkreises
- RSNRK: Regelstrecke des Notregelkreises
- S: Source
- S1: erster Schalter;
- S1CB: Kontrollblock für den ersten Schalter S1;
- SL: Squib-Last, auch sicherheitsrelevante Last genannt;
- SOA: Abkürzung (kein Bezugszeichen). Sicherer Betriebsparameterbereich (Englisch: Safe Operating Area);
- SQUIB: Zündelement eines Airbags
- T1: erster Transistor;
- T2: zweiter Transistor (Regelstreckenglied der Regelstrecke des Hauptregelkreises);
- T3: dritter Transistor;
- T4: vierter Transistor;
- V2: zweiter Knoten, an dem ein Sollwert von außen vorgegeben wird. Der zweite Knoten ist mit dem positiven Eingang + des Transkonduktanzverstärkers OTA verbunden;
- V3: dritter Knoten;
- V4: vierter Knoten, Der vierte Knoten stellt den Ausgang des Transkonduktanzverstärkers OTA dar;
- V5: fünfter Knoten;
- V6: sechster Knoten;
- V7: siebter Knoten;
- V7': innerer siebter Knoten innerhalb des integrierten Schaltkreises, der durch Abtrennung, beispielsweise durch einen Leitungsabriss BWB aus dem siebten Knoten V7 abgetrennt wird;
- VBT: Verbindungsbauteil der Regelstrecke des Notregelkreises
- VDD: Versorgungsspannung (z.B. 33V) bzw. Versorgungsspannungsleitung;
- VL: Lastspannung

### LITERATURVERZEICHNIS

DE 197 48 311 A1
DE 10 2005 045 233 A1
DE 103 02 789 B3
DE 10 2005 008 905 A1
DE 10 2005 030 770 A1
DE 60 2004 006 973 T2 (EP 1 602 532 B1)
DE 102 55 115 B3
DE 10 2010 028 544 A1
WO 2004/087486 A1

## Patentansprüche

1. Verfahren zur Regelung der Spannung für eine sicherheitsrelevante Last (SL), die gegenüber Spannungswerten außerhalb eines und insbesondere oberhalb eines Nominalspannungsbereichs (SOA) empfindlich ist, und insbesondere zur Regelung der Spannung für ein Zündelement eines Airbags, wobei bei dem Verfahren
- die Regelung der Spannung für die sicherheitsrelevante Last (SL) durch einen elektrische Signale verarbeitenden Hauptregelkreis (HRK) erfolgt,
**dadurchgekennzeichnet,**
- dass die Regelung der Spannung für die sicherheitsrelevante Last (SL) in dem Fall, in dem der Hauptregelkreis (HRK) unterbrochen ist, durch einen elektrische Signale verarbeitenden Notregelkreis (NRK) erfolgt,
- wobei der Notregelkreis (NRK) in dem Augenblick, in dem der Hauptregelkreis (HRK) unterbrochen wird, automatisch aktiviert wird.

2. Verfahren nach Anspruch 1, **dadurch gekennzeichnet, dass** der Hauptregelkreis (HRK) und der Notregelkreis (NRK) jeweils eine elektrische Impedanz aufweisende Regelstrecke (RSHRK, RSNRK) umfasst und dass die Impedanz der Regelstrecke (RSNRK) des Notregelkreises (NRK) größer ist als die Impedanz der Regelstrecke (RSHRK) des Hauptregelkreises (HRK).

3. Verfahren nach Anspruch 1 oder 2, **dadurch gekennzeichnet, dass** der Hauptregelkreis (HRK) und der Notregelkreis (NRK) einen gemeinsamen Regler aufweisen, an dessen Eingang eine Regelabweichungsgröße anliegt, die als Differenz zwischen einer Führungsgröße als Sollwert und einer Regelgröße als Istwert definiert ist, dass der Hauptregelkreis (HRK) und der Notregelkreis (NRK) jeweils eine eigene, mit einem Eingang und einem Ausgang versehene Regelstrecke aufweisen, die parallel zueinander geschaltet ist und den Ausgang des Reglers mit einer Rückführleitung für die Regelgröße verbinden, wobei der Ausgang der Regelstrecke (RSNRK) des Notregelkreises (NRK) an einem Verbindungsknotenpunkt mit der Rückführleitung verbunden ist, der weniger weit vom Eingang des Reglers entfernt angeordnet ist als der Ausgang der Regelstrecke (RSHRK) des Hauptregelkreises (HRK), und dass der Hauptregelkreis (HRK) aktiv ist, wenn der Abschnitt der Rückführleitung zwischen dem Ausgang der Regelstrecke (RSHRK) des Hauptregelkreises (HRK) und dem Verbindungsknotenpunkt nicht unterbunden ist, und bei einer Unterbrechung dieses Abschnitts der Rückführleitung automatisch der Notregelkreis (NRK) arbeitet.

4. Verfahren nach einem der Ansprüche 1 bis 3, **dadurch gekennzeichnet,**
- **dass** für die Regelung der Spannung durch sowohl den Hauptregelkreis (HRK) als auch den Notregelkreis (NRK) ein Regler verwendet wird, dessen Ausgang als Stellgrößensignal über eine elektrische Steuerleitung auf eine Regelstrecke gegeben wird, die ein elektrisches Regelstreckenglied (RSG) mit einem steuerbaren veränderbaren Widerstand aufweist, welcher in Reihe mit der sicherheitsrelevanten Last (SL) geschaltet ist, wobei das Stellgrößensignal den Wert des Widerstandes beeinflusst,
- **dass** dem Regler als Eingangsgröße die Differenz aus einem Führungsgrößensignal und einem Regelgrößensignal zugeführt wird, wobei das Führungsgrö-ßensignal als oberer Grenzwert des Nominalspannungsbereichs (SOA) definiert ist und das Regelgrößensignal das Ausgangssignal der Regelstrecke und damit der sich an der sicherheitsrelevanten Last (SL) ergebende Spannungswert ist und wobei das Regelgrößensignal über eine elektrische Rückführleitung als Rückführsignal zur Bildung eines Regelabweichungssignals zum Regler zurückgeführt wird,
- **dass** zwischen der Steuerleitung und der Rückführleitung ein diese beiden Leitungen verbindendes, elektrisches Verbindungsbauteil (VBT) angeordnet ist, das die Spannungsdifferenz zwischen dem Stellgrößensignal und dem Regelgrößensignal repräsentiert,
- **dass** der Hauptregelkreis (HRK) den Regler und die Regelstrecke aufweist,
- **dass** der Notregelkreis (NRK) den Regler und das Verbindungsbauteil (VBT) aufweist und
- **dass** die Regelung der Spannung für die sicherheitsrelevante Last (SL) bei einer zwischen dem Ausgang der Regelstrecke und dem Verbindungsknoten von Verbindungsbauteil (VBT) und Rückführleitung erfolgenden Unterbrechung der Rückführleitung automatisch von dem Hauptregelkreis (HRK) auf den Notregelkreis (NRK) übergeht.

5. Verfahren nach Anspruch 4, **dadurch gekennzeichnet, dass** das elektrische Regelstreckenglied (RSG) der Regelstrecke (RSHRK) des Hauptregelkreises (HRK) und das Verbindungsbauteil (VBT) der Regelstrecke (RSNRK) des Notregelkreises (NRK) jeweils eine elektrische Impedanz aufweisen, wobei die Impedanz des Verbindungsbauteils (VBT) größer ist als die Impedanz des Regelstreckenglieds (RSG).

6. Verfahren nach Anspruch 4 oder 5, **dadurch gekennzeichnet, dass** das Verbindungsbauteil (VBT) ein oder mehrere elektrische und/oder elektronische Bauelemente aufweist.

7. Verfahren nach einem der Ansprüche 4 bis 6, **dadurch gekennzeichnet, dass** das Regelstreckenglied (RSG) spannungsgesteuert wird und das Stellgrößensignal ein Spannungssignal ist und dass das Verbindungsbauteil (VBT) einen Widerstand aufweist, der zwischen die Steuerleitung und die Rückführleitung geschaltet ist.

8. Verfahren nach einem der Ansprüche 4 bis 7, **dadurch gekennzeichnet, dass** das Verbindungsbauteil (VBT) ein unidirektional elektrisch leitendes Sperrbauteil, insbesondere eine Diode oder einen als Diode arbeitenden Transistor aufweist, wobei das unidirektional leitende Sperrbauteil einen Stromfluss von dem Verbindungsknoten der Rückführleitung zur Steuerleitung hin unterbindet und in umgekehrter Richtung erlaubt.

9. Verfahren nach einem der Ansprüche 4 bis 8, **dadurch gekennzeichnet, dass** das Regelstreckenglied (RSG) einen Transistor mit einem Steueranschluss für den Empfang des am Ausgang des Reglers anliegenden Stellgrößensignals und einen hinsichtlich seines ohmschen Widerstandes veränderbaren Strompfad aufweist, in Reihe zu dem die sicherheitsrelevante Last (SL) geschaltet ist.

10. Verfahren nach einem der Ansprüche 1 bis 9, **dadurch gekennzeichnet, dass** die Rückführleitung einen Spannungsteiler mit einem Mittenanzapfungsknoten aufweist, der mit dem Eingang des Reglers zur Rückführung einer das Regelgrößensignal repräsentierenden Werts verbunden ist, der kleiner ist als der sich an der sicherheitsrelevanten Last (SL) ergebende Spannungswert.

11. Verfahren nach einem der Ansprüche 1 bis 10, **dadurch gekennzeichnet, dass** als Regler ein Regler mit einem das Regelabweichungssignal zu 0 ausregelnden I-Anteil und insbesondere ein PI- oder PID-Regler verwendet wird.

12. Vorrichtung zur Regelung der Spannung für eine sicherheitsrelevante Last (SL), die gegenüber Spannungswerten außerhalb und insbesondere oberhalb eines Nominalspannungsbereichs (SOA) empfindlich ist, und insbesondere zur Regelung der Spannung für ein Zündelement eines Airbags, mit
- einem Hauptregelkreis (HRK), der einen Regler mit einem Eingang für ein Regelabweichungssignal sowie einen Ausgang zum Ausgeben eines Stellgrö-ßensignals und eine die Spannung an der sicherheitsrelevanten Last (SL) als Regelgrößensignal beeinflussende Regelstrecke aufweist,
- wobei der Ausgang des Reglers über eine Steuerleitung mit dem Eingang der Regelstrecke verbunden und das Regelgrößensignal am Ausgang der Regelstrecke über eine Rückführleitung zum Eingang des Reglers rückführbar ist,
- wobei das Regelabweichungssignal die Differenz zwischen dem Regelgrößensignal und einem Führungsgrößensignal ist, das als oberer Grenzwert des Nominalspannungsbereichs (SOA) definiert ist, und
- einem Notregelkreis (NRK), der den Regler und ein parallel zur Regelstrecke angeordnetes, die Steuerleitung mit der Rückführleitung verbindendes, elektrisches Verbindungsbauteil (VBT) aufweist,
- wobei bei einem Wegfall des Regelgrößensignals in dessen Funktion zur Bildung des Regelabweichungssignals sich dieses automatisch als die Differenz zwischen dem Signal am Verbindungsknoten von Verbindungsbauteil (VBT) und Rückführleitung einerseits und dem Führungsgrößensignal andererseits ergibt.

13. Vorrichtung nach Anspruch 12, **dadurch gekennzeichnet, dass** der Hauptregelkreis (HRK) und der Notregelkreis (NRK) einen gemeinsamen Regler aufweisen, an dessen Eingang eine Regelabweichungsgröße anliegt, die als Differenz zwischen einer Führungsgröße als Sollwert und einer Regelgröße als Istwert definiert ist, dass der Hauptregelkreis (HRK) und der Notregelkreis (NRK) jeweils eine eigene, mit einem Eingang und einem Ausgang versehene Regelstrecke aufweisen, die parallel zueinander geschaltet ist und den Ausgang des Reglers mit einer Rückführleitung für die Regelgröße verbinden, wobei der Ausgang der Regelstrecke (RSNRK) des Notregelkreises (NRK) an einem Verbindungsknotenpunkt mit der Rückführleitung verbunden ist, der weniger weit vom Eingang des Reglers entfernt angeordnet ist als der Ausgang der Regelstrecke (RSHRK) des Hauptregelkreises (HRK), und dass der Hauptregelkreis (HRK) aktiv ist, wenn der Abschnitt der Rückführleitung zwischen dem Ausgang der Regelstrecke (RSHRK) des Hauptregelkreises (HRK) und dem Verbindungsknotenpunkt nicht unterbunden ist, und bei einer Unterbrechung dieses Abschnitts der Rückführleitung automatisch der Notregelkreis (NRK) arbeitet.

14. Vorrichtung nach Anspruch 12 oder 13, **dadurch gekennzeichnet, dass** die Regelstrecken (RSHRK) des Hauptregelkreises (HRK) und des Notregelkreises (NRK) jeweils eine elektrische Impedanz aufweisen, wobei die Impedanz der Regelstrecke (RSNRK) des Notregelkreises (NRK) größer ist als die Impedanz des Hauptregelkreises (HRK).

15. Vorrichtung nach Anspruch 14, **dadurch gekennzeichnet, dass** das elektrische Regelstreckenglied (RSG) der Regelstrecke (RSHRK) des Hauptregelkreises (HRK) und das Verbindungsbauteil (VBT) der Regelstrecke (RSNRK) des Notregelkreises (NRK) jeweils eine elektrische Impedanz aufweisen, wobei die Impedanz des Verbindungsbauteils (VBT) größer ist als die Impedanz des Regelstreckenglieds (RSG).

16. Vorrichtung nach einem der Ansprüche 12 bis 15, **dadurch gekennzeichnet, dass** das Verbindungsbauteil (VBT) ein oder mehrere elektrische und/oder elektronische Bauelemente aufweist.

17. Vorrichtung nach einem der Ansprüche 12 bis 16, **dadurch gekennzeichnet, dass** über dem Verbindungsbauteil (VBT) die Spannungsdifferenz zwischen dem Stellgrößensignal und dem Regelgrößensignal abfällt.

18. Vorrichtung nach einem der Ansprüche 12 bis 17, **dadurch gekennzeichnet, dass** das Regelstreckenglied (RSG) spannungsgesteuert ist und das Stellgrößensignal ein Spannungssignal ist und dass das Verbindungsbauteil (VBT) einen Widerstand aufweist, der zwischen die Steuerleitung und die Rückführleitung geschaltet ist.

19. Vorrichtung nach einem der Ansprüche 12 bis 18, **dadurch gekennzeichnet, dass** das Verbindungsbauteil (VBT) ein unidirektional elektrisch leitendes Sperrbauteil, insbesondere eine Diode oder einen als Diode arbeitenden Transistor aufweist, wobei das unidirektional leitende Sperrbauteil einen Stromfluss von dem Verbindungsknoten der Rückführleitung zur Steuerleitung hin unterbindet und in umgekehrter Richtung erlaubt.

20. Vorrichtung nach einem der Ansprüche 12 bis 19, **dadurch gekennzeichnet, dass** das Regelstreckenglied (RSG) ein Transistor mit einem Steueranschluss für den Empfang des am Ausgang des Reglers anliegendes Stellgrößensignals und einen hinsichtlich seines ohmschen Widerstandes veränderbaren Strompfad aufweist, in Reihe zu dem die sicherheitsrelevante Last (SL) geschaltet ist.

21. Vorrichtung nach einem der Ansprüche 12 bis 20, **dadurch gekennzeichnet, dass** die Rückführleitung einen Spannungsteiler mit einem Mittenanzapfungsknoten aufweist, der mit dem Eingang des Reglers zur Rückführung einer das Regelgrö-βensignal repräsentierenden Werts verbunden ist, der kleiner ist als der sich an der sicherheitsrelevanten Last (SL) ergebende Spannungswert.

22. Vorrichtung nach einem der Ansprüche 12 bis 21, **dadurch gekennzeichnet, dass** als Regler ein Regler mit einem das Regelabweichungssignal zu 0 ausregelnden I-Anteil und insbesondere ein PI- oder PID-Regler verwendet wird.

## Claims

1. A method for controlling the voltage for a safety-relevant load (SL) which is sensitive to voltage values outside and in particular above a nominal safe operating area (SOA), and in particular for controlling the voltage of a squib of an airbag, wherein in the method
- the control of the voltage for the safety-relevant load (SL) is performed by a main control circuit (HRK) processing electric signals,
**characterized in that**
- the control of the voltage for the safety-relevant load (SL) is performed by an emergency control circuit (NRK) processing electric signals, when the main control circuit is interrupted,
- wherein the emergency control circuit (NRK) is automatically activated when the main control circuit (HRK) is interrupted.

2. The method according to claim 1, **characterized in that** the main control circuit (HRK) and the emergency circuit (NRK) respectively comprises a controlled system (RSHRK, RSNRK) having an electric impedance and that the impedance of the controlled system (RSNRK) of the emergency control circuit (NRK) is larger than the impedance of the controlled system (RSHRK) of the main control circuit (HRK).

3. The method according to claim 1 or 2, **characterized in that** the main control circuit (HRK) and the emergency control circuit (NRK) comprise a common controller to whose input a control deviation variable is applied which is defined as a difference between a reference variable as a set value and a control variable as an actual value, that the main control circuit (HRK) and the emergency control circuit (NRK) respectively comprises its own controlled system including an input and an output, said controlled systems being connected in parallel and connecting the output of the controller to a feedback line for the control variable, wherein the output of the controlled system (RSNRK) of the emergency control circuit (NRK) is connected to the feedback line at a connecting node, which output is arranged at a smaller distance to the input of the controller than the output of the controlled system (RSHRK) of the main control circuit (HRK), and that the main control circuit (HRK) is active when the section of the feedback line between the output of the controlled system (RSHRK) of the main control circuit (HRK) and the connecting node is not interrupted, and that in the case of an interruption of this section of the feedback line the emergency control circuit (NRK) automatically operates.

4. The method according to any one of claims 1 to 3, **characterized in**
- **that** for controlling the voltage by both the main control circuit (HRK) and the emergency control circuit (NRK) a controller is used whose output as an actuating signal is supplied via an electric control line to a controlled system which comprises an electric controlled system element (RSG) having a controllable alterable resistor which is connected in series with the safety-relevant load (SL), wherein the actuating signal influences the value of the resistor,
- **that** the controller is supplied with a difference as an input variable between a reference signal and a control signal, wherein the reference signal is defined as an upper limit value of the nominal safe operating area (SOA) and the control signal is the output signal of the controlled system and thus the voltage value produced at the safety-relevant load (SL), and wherein the control signal as a feedback signal is fed back to the controller via an electric feedback line for producing a control deviation signal,
- **that** between the control line and the feedback line an electric connecting component (VBT) connecting these two lines is arranged, which connecting component represents the voltage difference between the actuating signal and the control signal,
- **that** the main control circuit (HRK) comprises the controller and the controlled system,
- **that** the emergency control circuit (NRK) comprises the controller and the connecting component (VBT), and
- **that** the control of the voltage for the safety-relevant load (SL) automatically transitions from the main control circuit (HRK) to the emergency control circuit (NRK) in the case of an interruption of the feedback line occurring between the output of the controlled system and the connecting node of connecting component (VBT) and feedback line.

5. The method according to claim 4, **characterized in that** the electric controlled system element (RSG) of the controlled system (RSHRK) of the main control circuit (HRK) and the connecting component (VBT) of the controlled system (RSNRK) of the emergency control circuit (NRK) respectively has an electric impedance, wherein the impedance of the connecting component (VBT) is larger than the impedance of the controlled system element (RSG).

6. The method according to claim 4 or 5, **characterized in that** the connecting component (VBT) comprises one or a plurality of electric and/or electronic components.

7. The method according to any one of claims 4 to 6, **characterized in that** the controlled system element (RSG) is voltage-controlled and the actuating signal is a voltage signal, and that the connecting component (VBT) comprises a resistor which is connected between the control line and the feedback line.

8. The method according to any one of claims 4 to 7, **characterized in that** the connecting component (VBT) comprises a unidirectionally electrically conducting blocking component, in particular a diode or a diode-configured transistor, wherein the unidirectionally conducting blocking component suppresses a current flow from the connecting node of the feedback line to the control line and allows said current flow in the reverse direction.

9. The method according to any one of claims 4 to 8, **characterized in that** the controlled system element (RSG) comprises a transistor having a control terminal for receiving the actuating signal existing at the output of the controller and a current path which is variable in terms of its ohmic resistance and to which the safety-relevant load (SL) is series-connected.

10. The method according to any one of claims 1 to 9, **characterized in that** the feedback line comprises a voltage divider having a central tapping node which is connected to the input of the controller for feeding back a value representing the control signal and being smaller than the voltage value produced at the safety-relevant load (SL).

11. The method according to any one of claims 1 to 10, **characterized in that** as a common controller a controller having an I-component compensating the control deviation signal to 0 and in particular a PI or PID controller is used.

12. A device for controlling the voltage for a safety-relevant load (SL) which is sensitive to voltage values outside and in particular above a nominal safe operating area (SOA), and in particular for controlling the voltage of a squib of an airbag, comprising
- a main control circuit (HRK) comprising a controller having an input for a control deviation signal as well as an output for outputting an actuating signal, and a controlled system influencing the voltage at the safety-relevant load (SL) as a control signal,
- wherein the output of the controller is connected to the input of the controlled system via a control line and the control signal at the output of the controlled system is adapted to be fed back to the input of the controller via a feedback line,
- wherein the control deviation signal is the difference between the control signal and a reference signal which is defined as an upper limit value of the nominal safe operating area (SOA), and
- an emergency control circuit (NRK) which comprises the controller and an electric connecting component (VBT) arranged in parallel to the controlled system and connecting the control line to the feedback line,
- wherein, when the control signal whose function is to produce the control deviation signal is omitted, said signal is automatically produced as the difference between the signal at the connecting node of connecting component (VBT) and feedback line on the one hand and the reference signal on the other hand.

13. The device according to claim 12, **characterized in that** the main control circuit (HRK) and the emergency control circuit (NRK) comprise a common controller at whose input a control deviation variable exists which is defined as a difference between a reference variable as a set value and a control variable as an actual value, that the main control circuit (HRK) and the emergency control circuit (NRK) respectively comprises its own controlled system including an input and an output, said controlled systems being connected in parallel and connecting the output of the controller to a feedback line for the control variable, wherein the output of the controlled system (RSNRK) of the emergency control circuit (NRK) is connected to the feedback line at a connecting node, which output is arranged at a smaller distance to the input of the controller than the output of the controlled system (RSHRK) of the main control circuit (HRK), and that the main control circuit (HRK) is active when the section of the feedback line between the output of the controlled system (RSHRK) of the main control circuit (HRK) and the connecting node is not interrupted and in the case of an interruption of this section of the feedback line the emergency control circuit (NRK) automatically operates.

14. The device according to claim 12 or 13, **characterized in that** the controlled systems (RSHRK) of the main control circuit (HRK) and the emergency control circuit (NRK) respectively has an electric impedance, wherein the impedance of controlled system (RSNRK) of the emergency control circuit (NRK) is larger than the impedance of the main control circuit (HRK).

15. The device according to claim 14, **characterized in that** the electric controlled system element (RSG) of the controlled system (RSHRK) of the main control circuit (HRK) and the connecting component (VBT) of the controlled system (RSNRK) of the emergency control circuit (NRK) respectively has an electric impedance, wherein the impedance of the connecting component (VBT) is larger than the impedance of the controlled system element (RSG).

16. The device according to any one of claims 12 to 15, **characterized in that** the connecting component (VBT) comprises one or a plurality of electric and/or electronic components.

17. The device according to any one of claims 12 to 16, **characterized in that** across the connecting component (VBT) the voltage difference between the actuating signal and the control signal drops.

18. The device according to any one of claims 12 to 17, **characterized in that** the controlled system element (RSG) is voltage-controlled, and the actuating signal is a voltage signal, and that the connecting component (VBT) comprises a resistor which is connected between the control line and the feedback line.

19. The device according to any one of claims 12 to 18, **characterized in that** the connecting component (VBT) comprises a unidirectionally electrically conducting blocking component, in particular a diode or a diode-configured transistor, wherein the unidirectionally conducting blocking component suppresses a current flow from the connecting node of the feedback line to the control line and allows said current flow in the reverse direction.

20. The device according to any one of claims 12 to 19, **characterized in that** the controlled system element (RSG) comprises a transistor having a control terminal for receiving the actuating signal existing at the output of the controller and a current path which is variable in terms of its ohmic resistance and to which the safety-relevant load (SL) is series-connected.

21. The device according to any one of claims 12 to 20, **characterized in that** the feedback line comprises a voltage divider having a central tapping node which is connected to the input of the controller for feeding back a value representing the control signal and being smaller than the voltage value produced at the safety-relevant load (SL).

22. The device according to any one of claims 12 to 21, **characterized in that** as a common controller a controller having an I-component compensating the control deviation signal to 0 and in particular a PI or PID controller is used.

## Revendications

1. Procédé de régulation de la tension pour une charge pertinente pour la sécurité (SL), laquelle est sensible à des valeurs de tension situées hors d'un intervalle de tension nominale (SOA) et en particulier au-delà de cet intervalle, et en particulier de régulation de la tension pour un élément de mise à feu d'un airbag, dans lequel lors du procédé
- la régulation de la tension pour la charge pertinente pour la sécurité (SL) s'effectue par un circuit régulateur principal (HRK) traitant des signaux électriques,
**caractérisé**
- **en ce que** la régulation de la tension pour la charge pertinente pour la sécurité (SL) s'effectue par un circuit régulateur d'urgence (NRK) traitant des signaux électriques dans le cas où le circuit régulateur principal (HRK) est interrompu,
- dans lequel le circuit régulateur d'urgence (NRK) est automatiquement activé à l'instant où le circuit régulateur principal (HRK) est interrompu.

2. Procédé selon la revendication 1, **caractérisé en ce que** le circuit régulateur principal (HRK) et le circuit régulateur d'urgence (NRK) comprennent chacun un système asservi respectif (RSHRK, RSNRK) présentant une impédance électrique et **en ce que** l'impédance du système asservi (RSNRK) du circuit régulateur d'urgence (NRK) est supérieure à l'impédance du système asservi (RSHRK) du circuit régulateur principal (HRK).

3. Procédé selon la revendication 1 ou 2, **caractérisé en ce que** le circuit régulateur principal (HRK) et le circuit régulateur d'urgence (NRK) comportent un régulateur commun, à l'entrée duquel est appliquée une grandeur de déviation de régulation définie comme la différence entre une grandeur de référence en tant que valeur de consigne et une grandeur asservie en tant que valeur réelle, **en ce que** le circuit régulateur principal (HRK) et le circuit régulateur d'urgence (NRK) comportent respectivement un système asservi propre prévu avec une entrée et une sortie, lesquels sont commutés en parallèle et relient la sortie du régulateur à un conducteur de rétroaction pour la grandeur asservie, dans lequel la sortie du système asservi (RSNRK) du circuit régulateur d'urgence (NRK) est relié à un noeud de jonction avec le conducteur de rétroaction, lequel noeud étant disposé plus près de l'entrée du régulateur que la sortie du système asservi (RSHRK) du circuit régulateur principal (HRK), et **en ce que** le circuit régulateur principal (HRK) est actif lorsque la section du conducteur de rétroaction située entre la sortie du système asservi (RSHRK) du circuit régulateur principal (HRK) et le noeud de jonction n'est pas empêchée, et le circuit régulateur d'urgence (NRK) fonctionne automatiquement dans le cas d'une rupture de cette section du conducteur de rétroaction.

4. Procédé selon l'une des revendications 1 à 3, **caractérisé en ce que**
- pour la régulation de la tension aussi bien par le circuit régulateur principal (HRK) que par le circuit régulateur d'urgence (NRK), un régulateur, dont la sortie comme signal de grandeur réglante est donnée par le biais d'un conducteur électrique de commande à un système asservi présentant un élément électrique de système asservi (RSG) avec une résistance variable et pilotable, est utilisé, lequel est commuté en série avec la charge pertinente pour la sécurité (SL), dans lequel le signal de grandeur réglante influe sur la valeur de la résistance,
- **en ce que** la différence entre un signal de grandeur de référence et un signal de grandeur asservie est fournie au régulateur en tant que grandeur d'entrée, dans lequel le signal de grandeur de référence est défini comme valeur limite supérieure de l'intervalle de tension nominale (SOA) et le signal de grandeur asservie est le signal de sortie du système asservi, et est ainsi la valeur de tension aux bornes de la charge pertinente pour la sécurité (SL) et dans lequel le signal de grandeur asservie est retourné au régulateur en tant que signal de rétroaction par le biais d'un conducteur électrique de rétroaction afin de former un signal de déviation de régulation,
- **en ce qu'**entre le conducteur de commande et le conducteur de rétroaction est disposé un composant de raccordement électrique (VBT) reliant ces deux conducteurs, lequel représente la différence de tension entre le signal de grandeur réglante et le signal de grandeur asservie,
- **en ce que** le circuit régulateur principal (HRK) comporte le régulateur et le système asservi,
- **en ce que** le circuit régulateur d'urgence (NRK) comporte le régulateur et le composant de raccordement (VBT) et
- **en ce que** la régulation de la tension pour la charge pertinente pour la sécurité (SL) est transférée automatiquement du circuit régulateur principal (HRK) au circuit régulateur d'urgence (NRK) en cas d'interruption du conducteur de rétroaction se produisant entre la sortie du système asservi et le noeud de jonction du composant de raccordement (VBT) et du conducteur de rétroaction.

5. Procédé selon la revendication 4, **caractérisé en ce que** l'élément électrique de système asservi (RSG) du système asservi (RSHRK) du circuit régulateur principal (HRK) et le composant de raccordement (VBT) du système asservi (RSNRK) du circuit régulateur d'urgence (NRK) présentent respectivement une impédance électrique, dans lequel l'impédance du composant de raccordement (VBT) est supérieure à l'impédance de l'élément de système asservi (RSG).

6. Procédé selon la revendication 4 ou 5, **caractérisé en ce que** le composant de raccordement (VBT) comporte un ou plusieurs composants électriques et/ou électroniques.

7. Procédé selon l'une des revendications 4 à 6, **caractérisé en ce que** l'élément de système asservi (RSG) est commandé en tension et le signal de grandeur réglante est un signal de tension et **en ce que** le composant de raccordement (VBT) présente une résistance commutée entre le conducteur de commande et le conducteur de rétroaction.

8. Procédé selon l'une des revendications 4 à 7, **caractérisé en ce que** le composant de raccordement (VBT) comporte un composant bloquant électriquement conducteur dans un seul sens, en particulier une diode ou un transistor fonctionnant en tant que diode, dans lequel le composant bloquant électriquement conducteur dans un seul sens empêche un passage de courant depuis le noeud de jonction du conducteur de rétroaction vers le conducteur de commande et le permet dans la direction inverse.

9. Procédé selon l'une des revendications 4 à 8, **caractérisé en ce que** l'élément de système asservi (RSG) comporte un transistor doté d'une grille pour recevoir le signal de grandeur réglante sortant du régulateur et un trajet de courant variable en regard de sa résistance ohmique, lequel est commuté en série par rapport à la charge pertinente pour la sécurité (SL).

10. Procédé selon l'une des revendications 1 à 9, **caractérisé en ce que** le conducteur de rétroaction comporte un diviseur de tension doté d'un noeud de prise centrale, lequel est relié à l'entrée du régulateur pour le retour d'une valeur représentant le signal de grandeur asservie, laquelle est inférieure à la valeur de tension aux bornes de la charge pertinente pour la sécurité (SL).

11. Procédé selon l'une des revendications 1 à 10, **caractérisé en ce qu'**en tant que régulateur, un régulateur doté d'une partie I régulant à 0 le signal de déviation de régulation, et en particulier un régulateur PI ou PID, est utilisé.

12. Dispositif de régulation de la tension pour une charge pertinente pour la sécurité (SL), laquelle est sensible à des valeurs de tension situées hors d'un intervalle de tension nominale (SOA) et en particulier au-delà de cet intervalle, et en particulier de régulation de la tension pour un élément de mise à feu d'un airbag, doté
- d'un circuit régulateur principal (HRK), lequel comporte un régulateur doté d'une entrée pour un signal de déviation de régulation ainsi que d'une sortie émettant un signal de grandeur réglante et un système asservi influant sur la tension aux bornes de la charge pertinente pour la sécurité (SL) en tant que signal de grandeur asservie,
- dans lequel la sortie du régulateur est relié à l'entrée du système asservi par le biais d'un conducteur de commande et le signal de grandeur asservie peut être retournée à l'entrée du régulateur par le biais d'un conducteur de rétroaction,
- dans lequel le signal de déviation de régulation est la différence entre le signal de grandeur asservie et un signal de grandeur de référence, lequel est défini comme la valeur limite supérieure de l'intervalle de tension nominale (SOA), et
- d'un circuit régulateur d'urgence (NRK), lequel comporte le régulateur et un composant de raccordement électrique (VBT) disposé en parallèle par rapport au système asservi et reliant le conducteur de commande au conducteur de rétroaction,
- dans lequel en cas de disparition du signal de grandeur asservie dans sa fonction de formation du signal de déviation de régulation celui-ci est automatiquement obtenu comme la différence entre le signal au noeud de jonction du composant de raccordement (VBT) et du conducteur de rétroaction d'une part et le signal de grandeur de référence d'autre part.

13. Dispositif selon la revendication 12, **caractérisé en ce que** le circuit régulateur principal (HRK) et le circuit régulateur d'urgence (NRK) comportent un régulateur commun, à l'entrée duquel est appliquée une grandeur de déviation définie comme la différence entre une grandeur de référence en tant que valeur de consigne et une grandeur asservie en tant que valeur réelle, **en ce que** le circuit régulateur principal (HRK) et le circuit régulateur d'urgence (NRK) comportent respectivement un système asservi propre prévu avec une entrée et une sortie, lesquels sont commutés en parallèle et relient la sortie du régulateur à un conducteur de rétroaction pour la grandeur asservie, dans lequel la sortie du système asservi (RSNRK) du circuit régulateur d'urgence (NRK) est relié à un noeud de jonction avec le conducteur de rétroaction, lequel noeud étant disposé plus près de l'entrée du régulateur que la sortie du système asservi (RSHRK) du circuit régulateur principal (HRK), et **en ce que** le circuit régulateur principal (HRK) est actif lorsque la section du conducteur de rétroaction située entre la sortie du système asservi (RSHRK) du circuit régulateur principal (HRK) et le noeud de jonction n'est pas empêchée, et le circuit régulateur d'urgence (NRK) fonctionne automatique dans le cas d'une rupture de cette section du conducteur de rétroaction.

14. Dispositif selon la revendication 12 ou 13, **caractérisé en ce que** les systèmes asservis (RSHRK) du circuit régulateur principal (HRK) et du circuit régulateur d'urgence (NRK) présentent respectivement une impédance électrique, dans lequel l'impédance du système asservi (RSNRK) du circuit régulateur d'urgence (NRK) est supérieure à l'impédance du circuit régulateur principal (HRK).

15. Dispositif selon la revendication 14, **caractérisé en ce que** l'élément électrique de système asservi (RSG) du système asservi (RSHRK) du circuit régulateur principal (HRK) et le composant de raccordement (VBT) du système asservi (RSNRK) du circuit régulateur d'urgence (NRK) présentent respectivement une impédance électrique, dans lequel l'impédance du composant de raccordement (VBT) est supérieure à l'impédance de l'élément de système asservi (RSG).

16. Dispositif selon l'une des revendications 12 à 15, **caractérisé en ce que** le composant de raccordement (VBT) comporte un ou plusieurs composants électriques et/ou électroniques.

17. Dispositif selon l'une des revendications 12 à 16, **caractérisé en ce que** la différence de tension entre le signal de grandeur réglante et le signal de grandeur asservie apparaît aux bornes du composant de raccordement (VBT).

18. Dispositif selon l'une des revendications 12 à 17, **caractérisé en ce que** l'élément de système asservi (RSG) est commandé en tension et le signal de grandeur réglante est un signal de tension et **en ce que** le composant de raccordement (VBT) présente une résistance commutée entre le conducteur de commande et le conducteur de rétroaction.

19. Dispositif selon l'une des revendications 12 à 18, **caractérisé en ce que** le composant de raccordement (VBT) comporte un composant bloquant électriquement conducteur dans un seul sens, en particulier une diode ou un transistor fonctionnant en tant que diode, dans lequel le composant bloquant électriquement conducteur dans un seul sens empêche un passage de courant depuis le noeud de jonction du conducteur de rétroaction vers le conducteur de commande et le permet dans la direction inverse.

20. Dispositif selon l'une des revendications 12 à 19, **caractérisé en ce que** l'élément de système asservi (RSG) comporte un transistor doté d'une grille pour recevoir le signal de grandeur réglante sortant du régulateur et un trajet de courant variable en regard de sa résistance ohmique, lequel est commuté en série par rapport à la charge pertinente pour la sécurité (SL).

21. Dispositif selon l'une des revendications 12 à 20, **caractérisé en ce que** le conducteur de rétroaction comporte un diviseur de tension doté d'un noeud de prise centrale, lequel est relié à l'entrée du régulateur pour le retour d'une valeur représentant le signal de grandeur asservie, laquelle est inférieure à la valeur de tension aux bornes de la charge pertinente pour la sécurité (SL).

22. Dispositif selon l'une des revendications 12 à 21, **caractérisé en ce qu'**en tant que régulateur, un régulateur doté d'une partie I régulant à 0 le signal de déviation de régulation, et en particulier un régulateur PI ou PID, est utilisé.
